(19) **Europäisches Patentamt**

**European Patent Office**

**Office européen des brevets**

(11) **EP 1 331 826 A1**

(12) **EUROPEAN PATENT APPLICATION**
published in accordance with Art. 158(3) EPC

(43) Date of publication:
**30.07.2003 Bulletin 2003/31**

(51) Int Cl.⁷: $H04N\ 7/32$

(21) Application number: **00970180.6**

(86) International application number:
**PCT/JP00/07598**

(22) Date of filing: **27.10.2000**

(87) International publication number:
**WO 02/037860 (10.05.2002 Gazette 2002/19)**

(84) Designated Contracting States:
**AT BE CH CY DE DK ES FI FR GB GR IE IT LI LU MC NL PT SE**
Designated Extension States:
**AL LT LV MK RO SI**

(71) Applicant: **MITSUBISHI DENKI KABUSHIKI KAISHA**
**Tokyo 100-8310 (JP)**

(72) Inventor: **SUZUKI, Mitsuyoshi,**
**Mitsubishi Denki K.K.**
**Tokyo 100-8310 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **MOVING VECTOR DETECTOR**

(57)    A motion vector detector 7A designates a plurality of search vectors for each of pixel patterns. A search window memory unit 2 and a converter 3 output pixel data for the designated search vector and the designated pixel pattern. An evaluator 4 calculates an evaluation for the designated search vector and the designated pixel pattern. A pixel pattern accumulator 8 calculates an accumulation of evaluations. A motion vector detector 7A aborts the accumulation of evaluations for a search vector providing a small accumulated total of evaluations so that the search vector is removed from a group of candidates for a motion vector.

## FIG.18

## Description

TECHNICAL FIELD

The present invention relates to a motion vector detection apparatus adapted for image processing methods such as those of H. 261 and Moving Picture Experts Group (MPEG) in which, for each segment block resulting from dividing a frame in image data, a motion vector detection is performed with respect to a frame already coded.

BACKGROUND ART

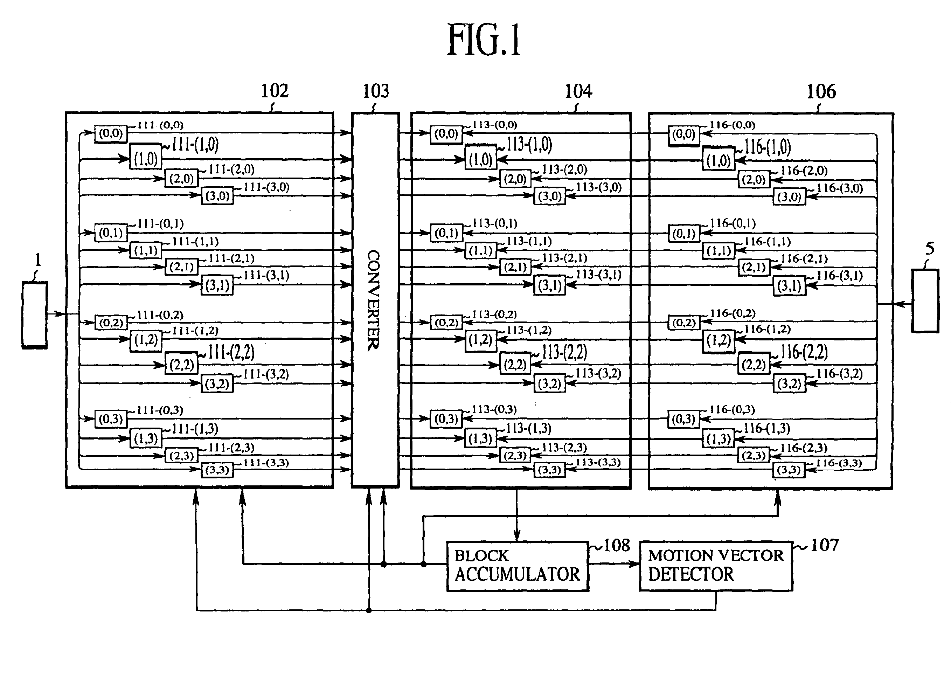

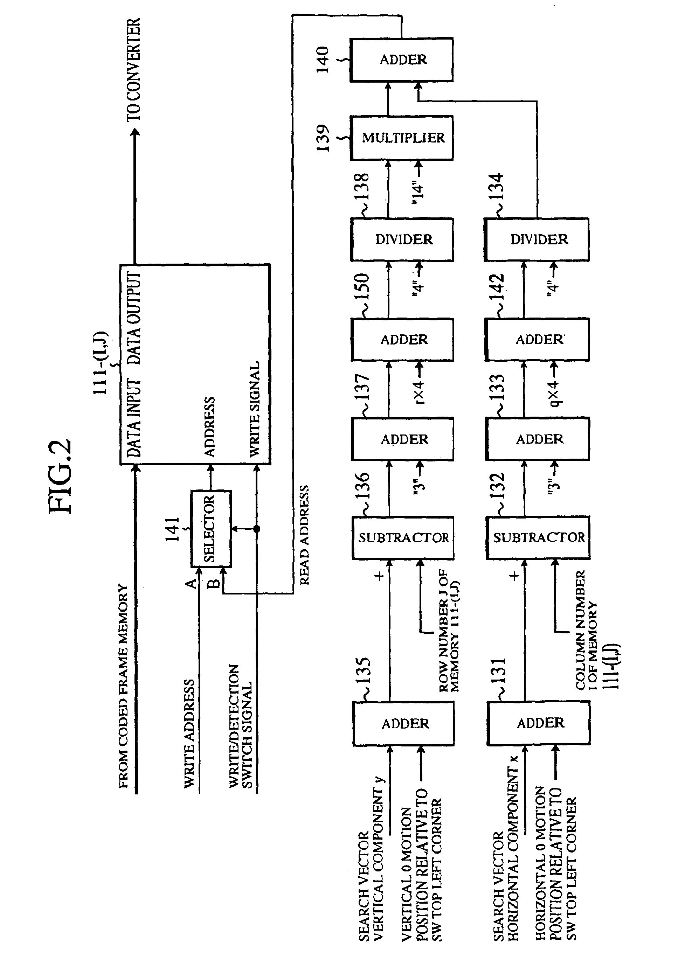

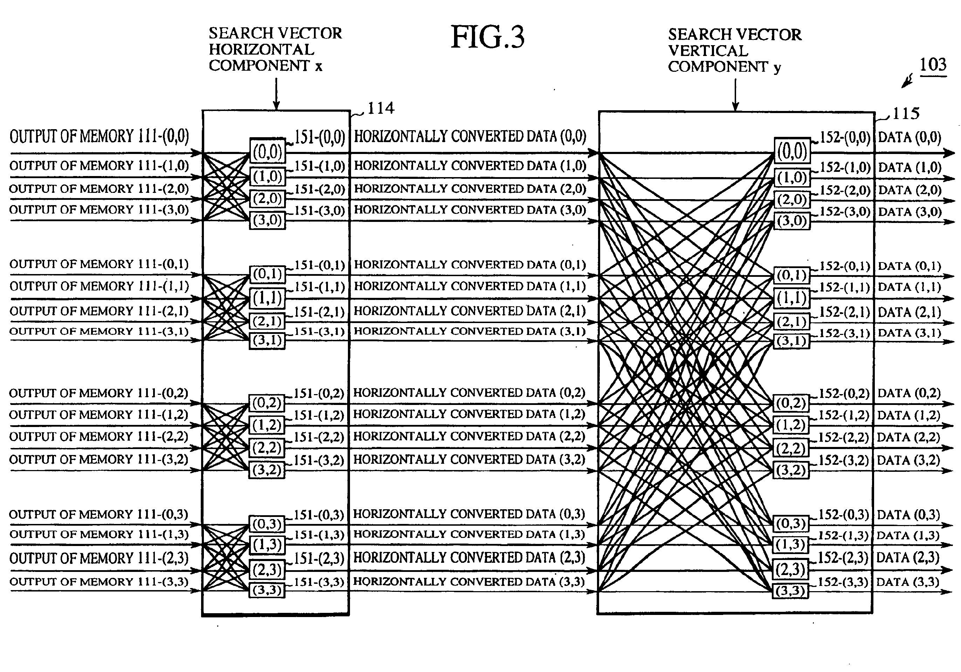

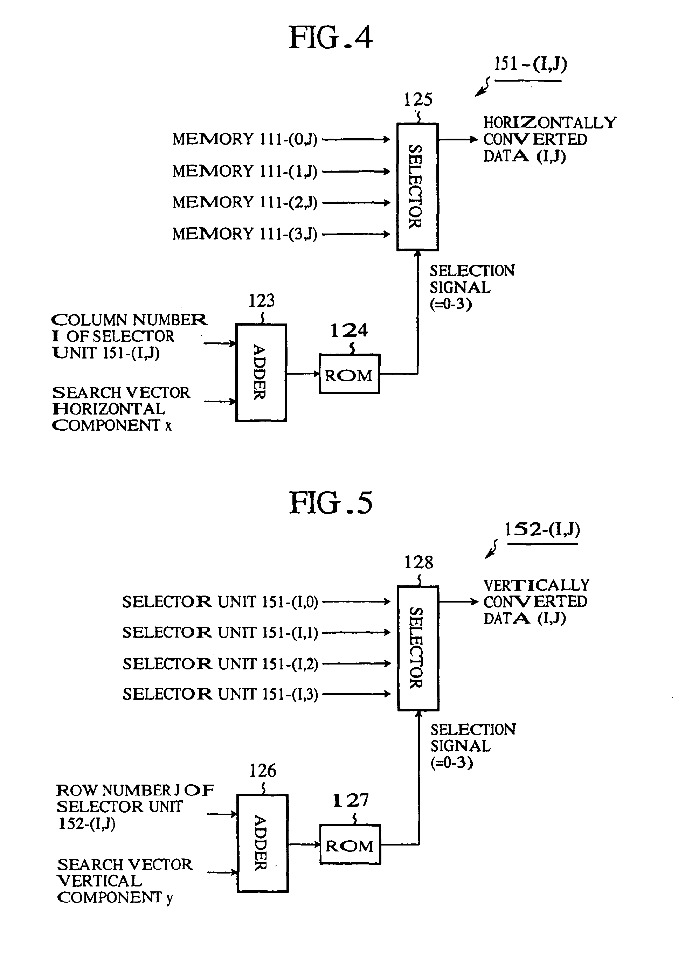

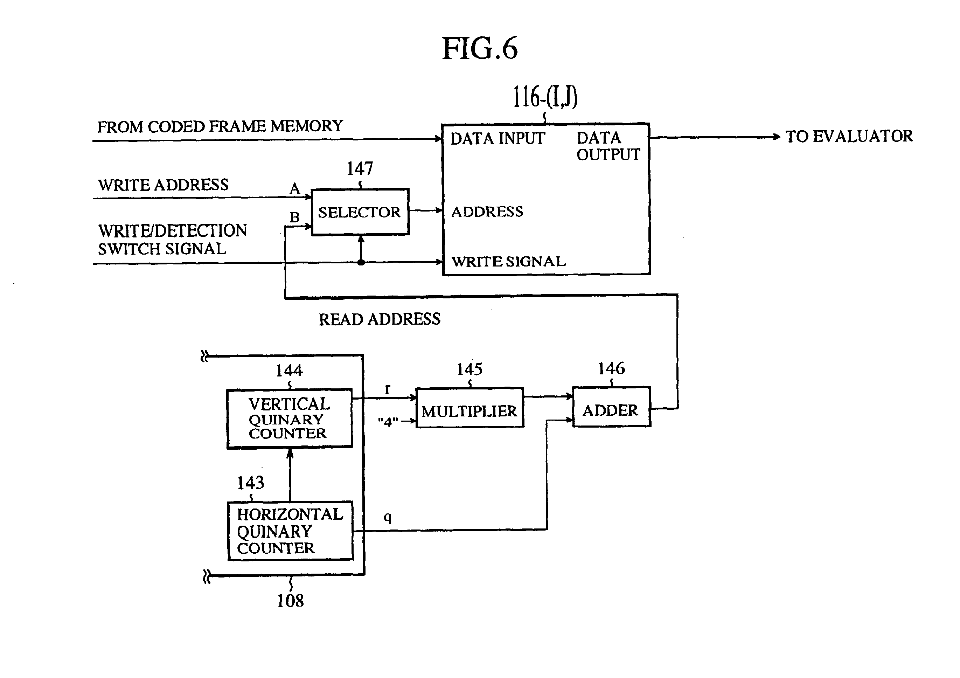

Fig. 1 is a block diagram showing a construction of a motion vector detection apparatus according to the related art. Fig. 2 is a block diagram showing an example of a circuit that controls the input and output of a memory in a search window memory unit of Fig. 1. Fig. 3 is a block diagram showing an example of construction of a converter of Fig. 1. Fig. 4 is a block diagram showing an example of construction of a selector unit in a horizontal converter unit of Fig. 3. Fig. 5 is a block diagram showing an example of construction of a selector unit in a vertical converter unit of Fig. 3. Fig. 6 is a block diagram showing an example of a circuit that controls the input and output of a memory in a reference memory unit of Fig. 1.

The motion vector detection apparatus according to the related art is configured such that a reference block has 16 rows and 16 columns and a segment block resulting from the division of the reference block has 4 rows and 4 columns.

Referring to Fig. 1, a coded frame memory 1 stores pixel data for prediction in a current frame to be coded, the stored pixel data being pixel data of a frame already inter-frame coded according to the H.261 standard or the MPEG standard. In performing prediction in a current frame to be coded, a motion vector is detected with respect to each of individual blocks resulting from dividing a frame to be coded. More particularly, horizontal and vertical distances between a position of a block in the current frame to be coded, and a position of an area in the coded frame corresponding to the block are detected to produce a motion vector.

A search window is divided into areas having the same size as the segment block of a size $I \times J$ resulting from dividing the referenced block into a predetermined number of individual blocks, rows and columns of the segment block corresponding to corresponding rows and columns in each of the search window areas resulting from the division. A search window memory unit 102 is provided with memories 111-(I,J) each storing a set of pixel data items having the same row address of I and the column address of J. There are as many number of memories 111-(I,J) as the number of pixels in the segment block. When the search window is divided into ($N \times M$) individual areas, N being the number of segment blocks in the reference block, each of the memories 111-(I,J) stores a set of ($N \times M$) pixel data items having the same row address of I and the column address of J in respective search window areas.

Referring to Fig. 2, a selector 141 is provided with a write address when pixel data is written into the memories 111-(I,J) and is provided with a read address when the pixel data is read out from the memories 111-(I, J). The selector supplies one of the addresses to the memories 111-(I,J) in accordance with a value of a write/detection switch signal.

An adder 131 calculates a sum of a horizontal component of a search vector and a horizontal position of the top left corner of the reference block relative to the top left corner of the search window so as to output a result of calculation. A subtracter 132 subtracts the column number I of each of the memories 111-(I,J) from a value output from the adder 131. An adder 133 calculates a sum of a value output from the subtracter 132 and a constant 3 so as to output a result of calculation. An adder 142 calculates a sum of a value output from the adder 133 and a quadruple of the horizontal address q (described later) of the segment block so as to output a result of calculation. A divider 134 outputs an integer part of a value resulting from dividing a value output from the adder 142 by a constant 4.

An adder 135 calculates a sum of a vertical component of the search vector and a vertical position of the top left corner of the reference block relative to the top left corner of the search window so as to output a result of calculation. A subtracter 136 subtracts the row number J of each of the memories 111-(I, J) from a value output from the adder 135 so as to output a result of calculation. An adder 137 calculates a sum of a value output from the subtracter 136 so as to output a result of calculation. An adder 150 calculates a sum of a value output from the adder 137 and a quadruple of the vertical address r (described later) of the segment block so as to output a result of calculation. A divider 138 outputs an integer part of a value resulting from dividing a value output from the adder 150 by a constant 4. A multiplier 139 calculates a product of a value output from the divider 138 and a constant 14 so as to output a result of calculation.

An adder 140 calculates a sum of a value output from the divider 134 and a value output from the multiplier 139 so as to supply a result of calculation to the selector 141 as a read address for reading from the memories 111-(I,J).

Referring back to Fig. 1, a converter 103 is supplied with selected pixel data stored in the memories 111-(0,0) - 111-(3,3) of the search window memory unit 102. More particularly, the converter 103 is supplied with pixel data in a search block distanced by a search vector from the position corresponding to the position of the segment block of the reference block, the search block having the same size as the segment block of the reference block. The converter 103 outputs a set of pixel data items at the coordinates (I,J) in a segment search block to pixel comparison units 113-(I,J) of an evaluator 104.

In the converter 103, a horizontal converter unit 114 is supplied, for each row J of the segment search block, with a set of pixel data items from the memories 111-(0,J) - 111-(3,J). Each of internal selector units 151-(0, J) - 151-(3,J) selects one pixel data item from the supplied set of p ixel data items in accordance with the horizontal component of the search vector so as to output the selected pixel data item. A vertical converter unit 115 is configured such that internal selector units 152- (I,0) - 152- (I,3) are supplied with pixel data from the selector units 151- (I,0) - 151- (I, 3) of the horizontal converter unit 114. Each of the selector units 152- (I,0) - 152-(I,3) selects a pixel data item from the supplied set of pixel data items in accordance with the vertical component of the search vector so as to output the selected pixel data item.

In the selector unit 151-(I,J) shown in Fig. 4, an adder 123 calculates a sum of the column number I of the selector unit 151- (I,J) and the horizontal component of the search vector so as to output a result of calculation to a ROM 124. The ROM 124 supplies a remainder resulting from dividing a value from the adder 123 by 4 to a selector 125 as a selection signal. The selector 125 selects a value from a memory 111-(SS,J) selected from the memories 111-(I,J) in accordance with a value SS of the selection signal from the ROM 124 so as to output the selected value.

In the selector unit 152-(I,J) shown in Fig. 5, an adder 126 calculates a sum of the row number J f the selector unit 152-(I,J) and the vertical component of the search vector so as to output a result of calculation to a ROM 127. The ROM 127 supplies a remainder resulting from dividing a value from the adder 126 by 4 to a selector 128 as a selection signal. The selector 128 selects a value from the selector unit 151-(I,SS) in accordance with the value SS of the selection signal from the ROM 127 so as to output the sel ected value.

Referring back to Fig. 1, a coded frame memory 5 stores pixel data of a current frame to be coded.

A reference memory unit 106 is provided with individual memories 116-(I, J) each storing a set of pixel data items having the same row address of I and the column address of J of the segment block resulting from dividing the reference block into a predetermined number of individual blocks, the reference block being one of 16 × 16 blocks obtained by dividing a current frame to be coded. There are as many number of memories 116-(I,J) as the number of pixels in the segment block. When the reference block is divided into M individual segment blocks, each of the memories 116-(I,J) stores a total of M pixel data items having the same row address I and the column address J in respective segment blocks.

Referring to Fig. 6, a multiplier 145 calculates a product of a vertical address r supplied by a vertical quinary counter 144 of a block accumulator 108 and a constant 4 so as to output a result of calculation. An adder 14 6 calculates a sum of a value output from the multiplier 145 and a horizontal address q of the segment block supplied by a horizontal quinary counter 143 of the block accumulator 108 so as to output a result of calculation to a selector 147 as a read address for reading from the memories 116-(I,J) . The selector 147 is supplied with a write address when writing pixel data into the memories 116- ( I,J) and also supplied with a read address when reading pixel data from the memories 116-(I,J). The selector 147 supplies one of the write address and the read address to the memories 116-(I, J) in accordance with a value of the write/detection switch signal.

Referring back to Fig. 1, an evaluator 104 is provided with pixel comparison units 113-(I,J) comparing the pixel data of the memories 116-(I,J) (I=0, ..., 3, J=0,...,3) constituting the reference memory unit 106, with the pixel data from the selector units 152-(I,J) of the converter 103.

The block accumulator 108 counts in the horizontal and vertical directions the occurrence of the segment block in the reference block using the horizontal quinary counter 143 and the vertical quinary counter 144 shown in Fig. 6. The block accumulator 108 supplies the count to the search window memory unit 102, the converter 103 and the reference memory unit 106 as the vertical address r and the horizontal address q of the segment block. The block accumulator 108 temporarily stores results of comparison from the pixel comparison units 113-(I,J) of the evaluator 104 for a segment block . The results of comparison for the entirety of segment blocks constituting a block are output en bloc from the block accumulator 108 to the motion vector detector 107.

A motion vector detector 107 detects a motion vector by identifying an optimum search vector, based on a result of comparison for one block from the block accumulator 108. The motion vector 107 sets a search vector in the search window memory unit 102 and the converter 103. For example, the pixel comparison units 113-(I, J) may calculate a difference between two pixel data items. A search vector providing the minimum difference in an absolute value is determined as a motion vector.

A description will now be given of the operation according to the related art.

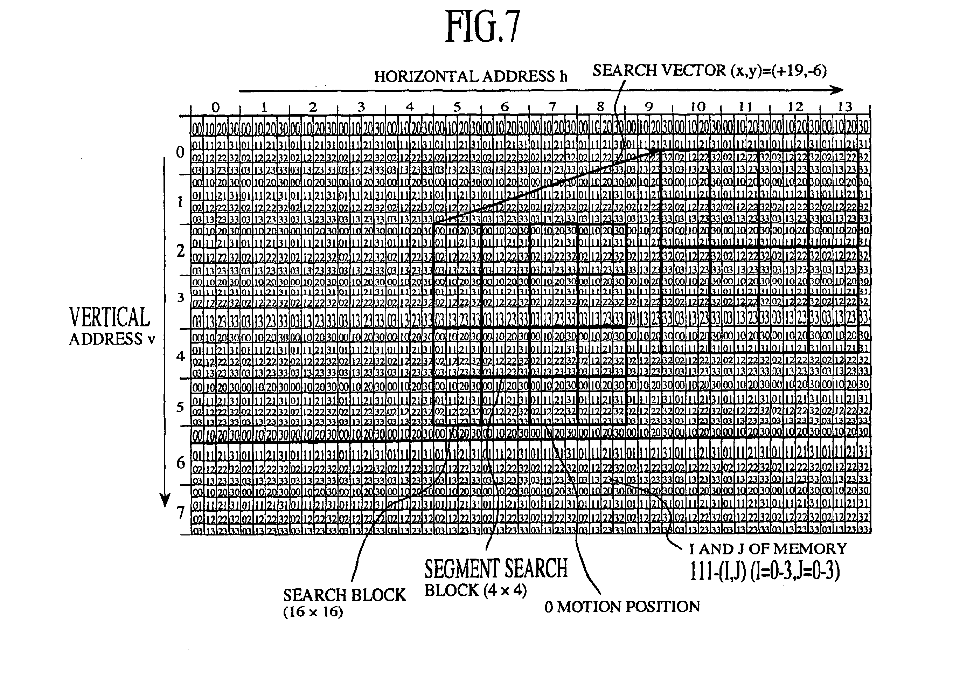

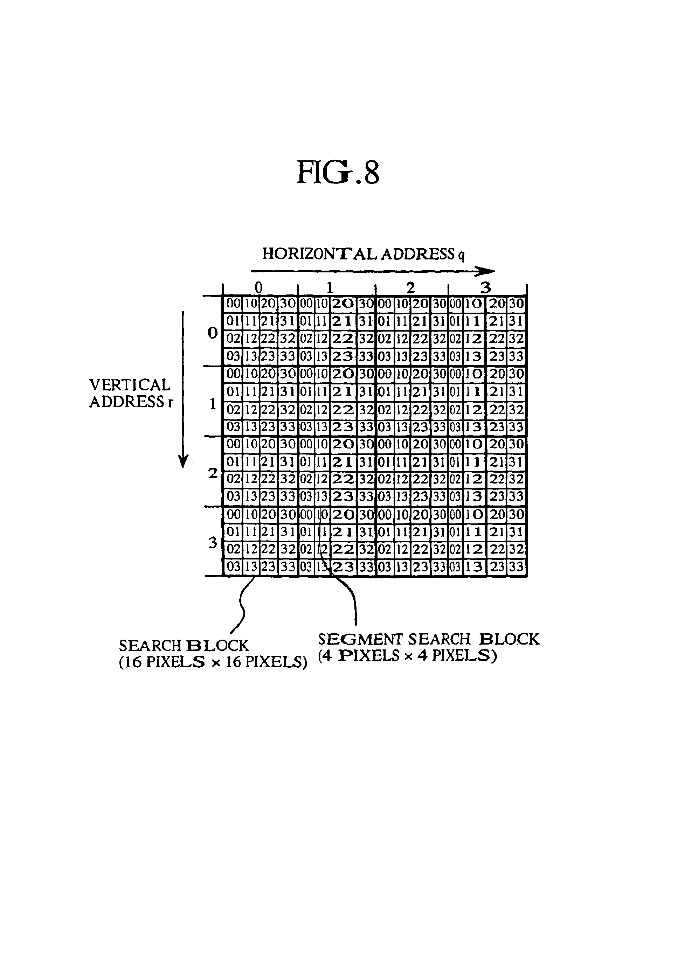

Fig. 7 shows an example of the search window and the segment search block. Fig. 8 shows the segment search block and the horizontal and vertical addresses of the segment search block (see the second embodiment) .

The coded frame memory 1 outputs, to the memories 111- (I,J) of the search window memory unit 102, a set of pixel data items having the same row address of I and the column address of J in respective search window areas resulting from dividing the search window into individual areas each having the same size as the segment block of the reference block.

As shown in Figs. 7 and 8, each segment block derived from 16-division of the block is assigned a horizontal address q and a vertical address r in the block, and also assigned a horizontal address h and a vertical address in the search window. Each of the memories 111-(I,J) stores a pixel data item at row J, column I in the segment block having the horizontal address h and the vertical address v in an address identified as $(14 \times v+h)$.

When the motion vector search is executed, a search vector is supplied from the motion vector detection unit 107 to the search window memory unit 102 and the converter 103. The horizontal address q and the vertical address r of the segment search block are supplied from the block accumulator 108 to the search window memory unit 102, the converter 103 and the reference memory unit 106.

In the search window memory unit 102, the horizontal component of the search vector is supplied to the adder 131 and the vertical component of the search vector is supplied to the adder 135. A quadruple of the horizontal address q of the segment search block is supplied to the adder 142 and a quadruple of the vertical address r of the segment block is supplied to the adder 150.

The adders 131, 133, 135, 137, 140, 142 and 150, the subtracters 132 and 136, the dividers 134 and 138 and the multiplier 139 calculate the read address for reading from a selected one of the memories 111-(I, J) corresponding to the horizontal address q and the vertical address r of the supplied search vector and the segment block. The selected one of the memories 111-(I,J) outputs the pixel data stored at the supplied read address to the selector units 151-(0,J) - 151-(3,J) of the pixel data storage unit 103.

The read address A(I,J) for the memories 111-(I,J) is calculated by the adders 131, 133, 135, 137, 140, 142 and 150, the subtracters 132 and 136, the dividers 134 and 138 and the multiplier 139 according to the expression below.

$$A(I,J)=(int((SWV0+y-J+r \times 4+3)/4))$$

$$\times 14+int((SWH0+x-I+q \times 4+3)/4)$$

where x indicates the horizontal component of the search vector, y indicates the vertical component of the search vector, SWHO indicates a horizontal position of the top left corner of the reference block relative to the top left corner of the search window, SWVO indicates a vertical position of the top left corner of the reference block relative to the top left corner of the search window, and int() indicates a function or an operator for truncating decimals of an argument.

In the converter 103, each of the selectors 151-(I, J) of the horizontal converter unit 114 selects one of values from the memories 111-(0,J) - 111-(3,J), in accordance with the horizontal component of the search vector supplied from the motion vector detector 107. The selected value is output from each of the selectors 151-(I,J) to each of the selectors 152-(I,0) - 152-(I,3).

In each of the selector units 151-(I,J), the adder 123 and the ROM 124 calculate the selection signal based on the column number I of each of the selector units 151-(I,J) and the horizontal component of the search vector so as to supply the selection signal to the selector 125. The value stored in the selected memory 111-(SS,J) is output in accordance with the value SS of the selection signal. The value SS of the selection signal is calculated by the adder 123 and the ROM 124 according to an expression be low, based on the column number I of the each of the selector units 151-(I,J) and the horizontal component x of the search vector.

$$SS=mod(I+x,4)$$

where mod(a,b) indicates a remainder produced when a is divided by b.

Each of the selector units 152-(I,J) of the vertical converter unit 115 selects one of values from the selector units 151-(I,0) - 151-(I,3) in accordance with the vertical component of the search vector supplied from the motion vector detector 107. The selected value is output from each of the selector units 152-(I,J) to the pixel comparison units 113-(I,J) of the evaluator 104.

In each of the selector units 152- (I,J), the adder 126 and the ROM 127 calculate the selection signal, based on the row number J of each of the selector units 152-(I,J) and the vertical component of the search vector so as to supply the selection signal to the selector 128. The value from each of the selector units 151-(I, SS) is output in accordance with the value SS of the selection signal. The value SS of the selection signal is calculated by the adder 126 and the ROM 127 according to an expression below, based on the row number J of each of the selector units 152-(I,J) and the vertical component y of the search vector. $SS=mod(J+y,4)$

The coded frame memory 5 stores in the memories 116-(I,J) pixel data for one of the segment blocks obtained by dividing the frame to be coded, such that each of the memories 116-(I,J) stores a set of pixel data i tems having the same row address of I and the column address of J in respective segment blocks.

The memories 116-(0,0) - 116(3,3) of the reference memory unit 106 supplies clock by clock the pixel data of the segment block corresponding to the horizontal address q and the vertical address r supplied, to the pixel comparison units 113-(0,0) - 113-(3,3) of the evaluator unit 104.

The multiplier 145 and the adder 146 of the reference memory unit 106 calculate the read address $(=r \times 4+q)$ from the horizontal address q and the vertical address r supplied thereto. The read address thus calculated is supplied to the memories 116-(0,0) - 116-(3,3) via the selector 147.

When the pixel data are supplied from the converter 103 and the reference memory unit 106, the pixel comparison units 1 13-(I,J) of the evaluator 104 calculate a di fference between the pixel data from each of the selector units 152-(I, J) of the converter 103 and the pixel data from each of the memories 116-(I,J) of the reference memory unit 106. The difference is supplied to the block accumulator unit 108. When the difference between the pixel data is supplied, the block accumulator 108 outputs the horizontal address q and the vertical address r for specifying the next segment block. When the pixel data differences for one block are accumulated, the pixel data differences are output to the motion vector detector 107. The motion vector detector 107 stores a sum of absolute values of the pixel data differences supplied from the evaluator 104, in relation to the search vector.

The motion vector detector 107 supplies an updated search vector to the search window memory unit 102 and the converter 103, based on a predetermined sequence or on the relationship between the calculated search vector and the evaluation.

Thus, the motion vector detector 107 continues to update the search vector until a predetermined sequence is gone through or until the evaluation value is below a predetermined level. The search vector that provided the minimum evaluation value is identified as the motion vector.

As described, in the motion vector detection apparatus according to the related art, the reference memory unit 106 stores pixel data constituting a segment block resulting from dividing a reference block. The search window memory unit 102 stores pixel data of a search window of a coded frame such that each of the memories stores a set of pixel data items having the same row address and the column address in respective search window area resulting from dividing the search window into individual areas having the same size as the segment block. One of the pixel data items having the same row address and the column address in respective search window areas stored in the memories 111-(I,J) of the search window memory unit 102 is selected. A segment search block distanced by a search vector from the position corresponding to the position of the segment block of the reference block is selected. The pixel data stored in the reference memory unit 106 is compared with the selected pixel data pixel by pixel. A motion vector is detected based on the result of comparison. With the construction described above, it is possible to reduce the circuit scale and the apparatus cost by reducing the number of pixel comparison units 113-(I,J) of the evaluator 14. The construction as described has a drawback in that it is necessary to perform pixel data comparison for the entirety of segment blocks constituting a block. It is therefore difficult to reduce time required to detect a motion vector.

Another drawback is that, when bidirectional prediction is to be executed, an apparatus for detecting a forward motion vector and an apparatus for detecting a backward motion vector are required, thus increasing the scale of the apparatus.

The present invention is produced out of efforts to resolve the disadvantages described above. An object of the invention is to provide a motion vector detection apparatus according to the invention includes: first storage means storing pixel data constituting a plurality of pixel patterns constituting the block; second storage means storing pixel data constituting an area of a predetermined size in a coded frame, such that each memory stores a set of pixel data items at the same positions in a plurality of pixel patterns each including a predetermined number of pixels distanced from each other in the area by predetermined intervals; selection means supplied with a search vector and selecting a pixel pattern in a block of the area designated by the search vector; comparison means performing a pixel-by-pixel comparison between the pixel pattern selected by the selection means with the corresponding pixel pattern stored in the first storage means; and detection means detecting a motion vector based on results of comparison by the comparison means, so that: a result of comparison for each pixel pattern is similar to that of the whole block; it is thus not necessary to perform comparison for the entirety of pixel patterns constituting the block; a result of comparison for each of the blocks is obtained in a relatively short period of time; and a motion vector is detected in a relatively short period of time.

Another object of the present invention is to provide a motion vector detection apparatus according to the invention may include: first storage means storing pixel data constituting a plurality of pixel patterns or a plurality of segment blocks constituting the block; second storage means storing pixel data constituting an area of a predetermined size in a coded frame, such that each memory stores a set of pixel data items at the same positions in a plurality of pixel patterns or a plurality of segment blocks constituting the area; selection means supplied with a plurality of search vectors and successively selecting a pixel pattern or a segment block in a block of the area designated by the search vector; comparison means performing a pixel -by-pixel comparison between the pixel pattern or the segment block selected by the selection means with the corresponding pixel pattern or the corresponding segment block stored in the first storage means; search vector narrowing-down means aborting respective processes in the selection means and the comparison means for a search vector, even before comparison by the comparison means is completed for the entirety of pixel patterns or the entirety of segment blocks using a search vector, depending on results of comparison for pixel patterns and segment blocks processed up to then, the search vector that caused the abortion is eliminated by the search vector narrowing-down means from a group of candidates for a motion vector; and detection means detecting a motion vector from the group of candidates for a motion vector, based on results of comparison by the comparison means so that: a step for accumulation is aborted for a search vector that is not likely to be come a motion vector; the volume of calculation required to detect a motion vector is reduced; and a motion vector is detected in a relatively short period of time.

Still another object of present invention is to provide a motion vector detection apparatus according to the invention may include: first storage means storing a predetermined number of pixel data items selected from the entirety of pixel data constituting a block; second storage. means storing pixel data in a first area of the coded frame for detection of a forward motion vector and a second area of the coded frame for detection of a backward motion vector; selection means supplied with a forward search vector and a backward search vector and selecting a predetermined number of pixel data items constituting image data of an area having the same size as the block and distanced by a search vector from a position corresponding to a position of of the block, the predetermined number of pixel data items constituting the pixel data stored in the second storage means; comparison means comparing the predetermined number of pixel data items stored in the first storage means with the predetermined number of pixel data items selected by the selection means; and detection means detecting the forward motion vector and the backward motion vector, based on results of comparison by the comparison means so that, while the storage capacity required in the search window memory unit is increased, capability of detecting forward and backward motion vectors is available without introducing additional constituting elements.

DISCLOSURE OF THE INVENTION

A motion vector detection apparatus according to the invention includes: first storage means storing pixel data constituting a plurality of pixel patterns constituting the block; second storage means storing pixel data constituting an area of a predetermined size in a coded frame, such that each memory stores a set of pixel data items at the same positions in a plurality of pixel patterns each including a predetermined number of pixels distanced from each other in the area by predetermined intervals; selection means supplied with a search vector and selecting a pixel pattern in a block of the area designated by the search vector; comparison means performing a pixel-by-pixel comparison between the pixel pattern selected by the selection means with the corresponding pixel pattern stored in the first storage means; and detection means detecting a motion vector based on results of comparison by the comparison means. With this construction, a result of comparison for each pixel pattern is similar to that of the whole block. It is thus not necessary to perform comparison for the entirety of pixel patterns constituting the block. Thus, a result of comparison for each of the blocks is obtained in a relatively short period of time so that a motion vector is detected in a relatively short period of time.

A motion vector detection apparatus according to the invention may include : first storage means storing pixel data constituting a plurality of pixel patterns or a plurality of segment blocks constituting the block; second storage means storing pixel data constituting an area of a predetermined size in a coded frame, such that each memory stores a set of pixel data items at the same positions in a plurality of pixel patterns or a plurality of segment blocks constituting the area; selection means supplied with a plurality of search vectors and successively selecting a pixel pattern or a segment block in a block of the area designated by the search vector; comparison means performing a pixel-by-pixel comparison between the pixel pattern or the segment block selected by the selection means with the cor responding pixel pattern or the corresponding segment block stored in the first storage means; search vector narrowing-down means aborting respective processes in the selection means and the comparison means for a search vector, even before comparison by the comparison means is complete d for the entirety of pixel patterns or the entirety of segment blocks using a search vector, depending on results of comparison for pixel patterns and segment blocks processed up to then, the search vector that caused the abortion is eliminated by the search vector narrowing-down means from a group of candidates for a motion vector; and detection means detecting a motion vector from the group of candidates for a motion vector, based on results of comparison by the comparison means. With this construction, a step for accumulation is aborted for a search vector that is not likely to be come a motion vector so that the volume of calculation required to detect a motion vector is reduced and a motion vector is detected in a relatively short period of time.

The search vector narrowing-down means may remove at least one of the plurality of search vectors from a group of candidates for a motion vector, when a predetermined condition is met after a comparison for the plurality of search vectors for a given pixel pattern or a given segment block is completed. With this, the process for aborting a step of accumulation is simplified.

The comparison means may calculate an evaluation as a result of comparison, and the search vector narrowing-down means may calculate accumulated totals of evaluations for a plurality of search vectors for a plurality of pixel patterns and arrange the accumulated totals of evaluations for the plurality of search vectors in an ascending order or a descending order for storage, so as to remove at least one search vector from a group of candidates for a motion vector, based on a rank of an accumulated total in the arrangement. With this, it is not necessary to refer to accumulated totals of evaluations for all of the search vectors in selecting a search vector for which a step of accumulation of evaluations is aborted. Accordingly, selection of a search vector for which a step of accumulation of evaluations is aborted is facilitated.

The comparison means may calculate an evaluation as a result of comparison, the search vector narrowing-down means may sel ect a search vector corresponding to a minimum value or a maximum value of accumulated total of evaluations, may perform accumulation of evaluations for the selected search vector, and the detection means may identify a search vector, providing the minimum value or the maximum value of accumulated total with an accumulation count equal to a predetermined count, as a motion vector. With this, a search vector likely to be identified as a motion vector continues to be processed in a step of accumulation of evaluations ahead of other search vectors so that a motion vector is detected in a relatively short period of time

The search vector narrowing-down means may store accumulated totals of evaluations for the plurality of search vectors in an ascending order or a descending order for storage, may select a search vector at a head of the arrangement, may perform accumulation of evaluations for the selected search vector, may re-arrange the accumulated totals of evaluations for a plurality of search vectors in the asc ending order or the descending order for storage, and, when the accumulated total of evaluations at the head of the arrangement is reached with a predetermined accumulation count, the search vector providing that accumulated total may be identified as a motion vector. With this, it is only necessary to select a search vector at the head of the arrangement when selecting a search vector for which a subsequent step of accumulation of evaluations is performed. Since it is not necessary to refer to the accumulated totals of evaluations for the search vectors, selection of a search vector for which a step of accumulation of evaluations is aborted is facilitated.

A motion vector detection apparatus according to the invention may include : first storage means storing a predetermined number of pixel data items selected from the entirety of pixel data constituting a block; second storage means storing pixel data in a first area of the coded frame for detection of a forward motion vector and a second area of the coded frame for detection of a backward motion vector; selection means supplied with a forward search vector and a backward search vector and selecting a predetermined number of pixel data items constituting image data of an area having the same size as the block and distanced by a search vector from a position corresponding to a position of of the block, the predetermined number of pixel data items constituting the pixel data stored in the second storage means; comparison means comparing the predetermined number of pixel data items stored in the first storage means with the predetermined number of pixel data items selected by the selection means; and detection means detecting the forward motion vect or and the backward motion vector, based on results of comparison by the comparison means. While the storage capacity required in the search window memory unit is increased, capability of detecting forward and backward motion vectors is available without introducing additional constituting elements.

BRIEF DESCRIPTION OF THE DRAWINGS

Fig. 1 is a block diagram showing a construction of a motion vector detection apparatus according to the related art.
Fig. 2 is a block diagram showing an example of circuit controlling the input and output of a memory in a search window memory unit of Fig. 1.
Fig. 3 is a block diagram showing a construction of a converter of Fig. 1.
Fig. 4 is a block diagram showing a construction of a selector unit in a horizontal converter unit of Fig. 3.
Fig. 5 is a block diagram showing a construction of a selector unit of a vertical converter unit of Fig. 3.
Fig. 6 is a block diagram showing an example of circuit controlling the input and output of a memory in a reference memory unit of Fig. 1.
Fig. 7 shows an example of a search window and a segment search block.
Fig. 8 shows a segment search block, and a horizontal address and a vertical address of the segment search block.
Fig. 9 is a block diagram showing a construction of a motion vector detection apparatus according to a first embodiment of the present invention.
Fig. 10 is a block diagram showing an example of circuit controlling the input and output of a memory in the search window memory unit of Fig. 9.
Fig. 11 is a block diagram showing an construction of a converter of Fig. 9.
Fig. 12 is a block diagram showing a construction of a selector unit in a horizontal converter unit of Fig. 11.
Fig. 13 is a block diagram showing a construction of a selector unit in a vertical converter unit of Fig. 11.
Fig. 14 shows an example of correspondence in a search window memory unit between addresses of pixel data and memories storing the pixel data, and an example of a pixel pattern in the search window.
Fig. 15 shows an example of correspondence in a reference memory unit between addresses of pixel data and memories storing the pixel data, and an example of a pixel pattern in the search window.
Fig. 16 shows a sequence of selection of pixel patterns.
Fig. 17 shows an example of pixels used in a segment block approach and pixel s used in a pixel pattern approach.

Fig. 18 is a block diagram showing a construction of a motion vector detection apparatus according to a second embodiment of the present invention.

Fig. 19 is a block diagram showing a construction of a motion vector detector and a pixel pattern accumulation unit according to the second embodiment.

Fig. 20 shows an example of accumulation count and accumulated total of evaluations stored in a storage means for each of search vectors.

Fig. 21 illustrates an example of how accumulation of evaluations is aborted according to a third embodiment of the present invention.

Fig. 22 is a block diagram showing a cons truction of a motion vector detector and a storage means in a pixel pattern accumulator according to a fourth embodiment of the present invention.

Fig. 23 is a block diagram showing a construction of each of storage units of Fig. 22.

Fig. 24 shows a sequence of accumulation of evaluations according to a fifth embodiment of the present invention.

Fig. 25 is a block diagram showing a construction of a motion vector detector in a motion vector detection apparatus according to a sixth embodiment of the present invention.

Fig. 26 shows an example of a forward search window and a forward search block.

Fig. 27 shows an example of a backward search window and a backward search block.

BEST MODE OF CARRYING OUT THE INVENTION

In order to give a detailed explanation of the invention, the best mode of carrying out the invention will now be described with reference the attached drawings.

First embodiment

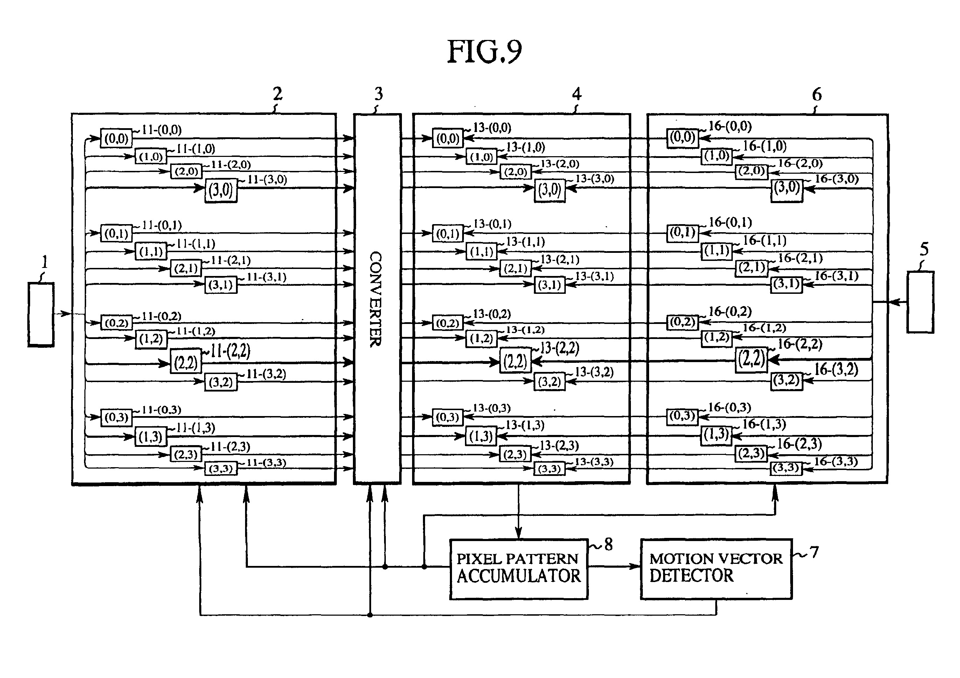

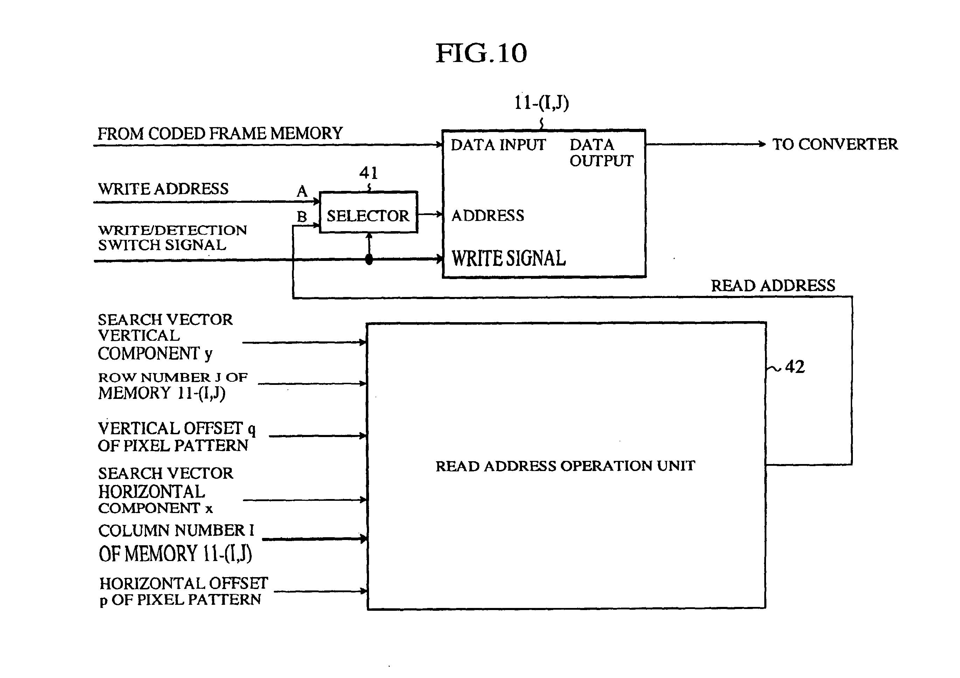

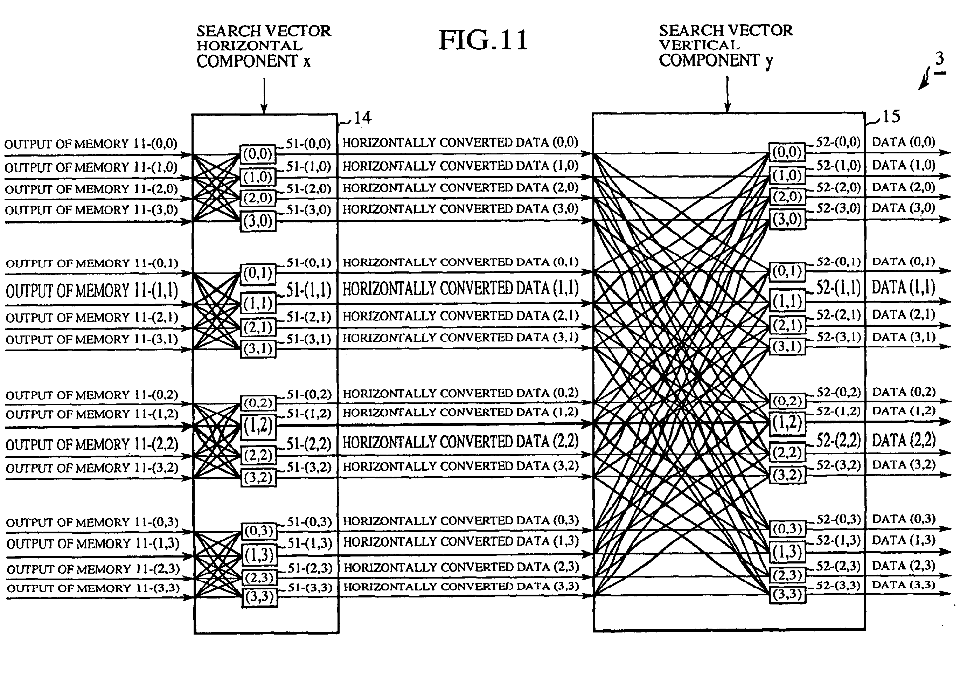

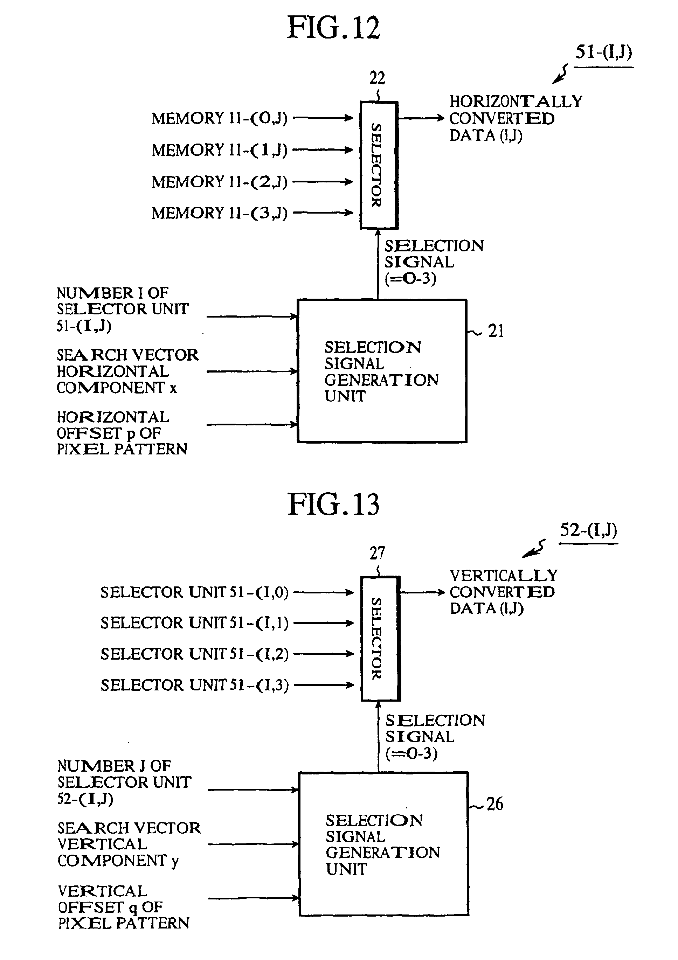

Fig. 9 is a block diagram showing a construction of a motion vector detection apparatus according to a first embodiment of the present invention. Fig. 10 is a block diagram showing an example of circuit control ling the input and output of a memory in the search window memory unit of Fig. 9. Fig. 11 is a block diagram showing an construction of a converter of Fig. 9. Fig. 12 is a block diagram showing a construction of a select or unit in a horizontal converter unit of Fig. 11. Fig. 13 is a block diagram showing a construction of a selector unit in a vertical converter unit of Fig. 11.

The motion vector detection apparatus according to the first embodiment is configured such that a reference block has 16 rows and 16 columns and the reference block comprises 1 6 pixel patterns.

Referring to Fig. 9, a coded frame memory 1 stores pixel data for prediction in a current frame to be coded, the stored pixel data being pixel data of a frame already inter-frame coded according to the H.261 standard or the MPEG standard. In performing prediction in a current frame to be coded, a motion vector is detected with respect to each of individual blocks resulting from dividing a frame to be coded. More particularly, horizontal and vertical distances between a position of a block in the current frame to be coded, and a position of an area in the coded frame corresponding to the block are detected to produce a motion vector.

A search window memory unit 2 (second storage mans, selection means) stores pixel data constituting a search window of a coded frame, such that each memory stores a set of pixel data items at the same positions in a plurality of pixel patterns each comprising a predetermined number of pixels distanced from each other in a search window by predetermined intervals.

Each of memories 11-(I, J) of the search window memory unit 2 according to the first embodiment stores a set of pixel data items at the same positions in a plurality of pixel patterns each constituting a segment block resulting from dividing the search window into blocks having the same size as the reference block. For example, dssuming that the search window has a size of 64 pixels by 32 pixels, the reference block has a size of 16 pixels by 1 6 pixels, and the pixel pattern comprises pixels distanced from each other by 3 pixels, the search window is divided into 8 individual blocks each comprising 2 pixels vertically and 4 pixels horizontally. The pixel data item at an address (I,J) (I=0,...,3, J=0,...3) of each of the 16 areas (4 vertical pixels by 4 horizontal pixels ) constituting each of the individual blocks (16 vertical pixels by 16 horizontal pixels ) is stored in each of 16 memories 11-(I,J), respectively.

In each of the individual blocks, each of the pixels patterns comprises a total of 16 pixels including a pixel $(0+p,0+q)$, a pixel $(4+p,0+q)$, a pixel $(8+p,0+q)$, a pixel $(12+p,0+q)$, a pixel $(0+p,4+q)$, a pixel $(4+p,4+q)$, a pixel $(8+p,4+q)$, a pixel $(12+p,4+q)$, a pixel $(0+p,8+q)$, a pixel $(4+p,8+q)$, a pixel $(8+p,8+q)$, a pixel $(12+p,8+q)$, a pixel $(0+p,12+q)$, a pixel $(4+p,12+q)$, a pixel $(8+p,12+q)$, and a pixel $(12+p,12+q)$, where $p=0,...,3$ and $q=0,...,3$. Thus, it is possible to simultaneously read pixel data constituting a pixel pattern comprising 16 pixels from the memories 11-(I,J).

Referring to Fig. 10, a selector 41 is provided with a write address when pixel data is written into the memories 11-(I,J) and is provided with a read address when the pixel data is read out from the memories 11-(I,J) . The selector supplies one of the addresses to the memories 11-(I,J) in accordance with a value of a write/detection switch signal. A read address operation unit 42 calculates a read address A(I,J) for the memories 11-(I,J) according to expression (1). The read address is used when the pixel data constituting a pixel pattern are simultaneously output from the memories 11-(0,0) - 11-(3,3).

$$A(I,J) = (int((y1+12-$$

$$4 \times j)/16) \times 4 + mod(y1,4)) \times 16 + int((x1+12-4 \times i)/16)$$

$$\times 4 + mod(\times 1,4) \qquad (1)$$

where x1=24+x+p, y1=8+y+q and (x,y) indicates a search vector. The expression above is valid for a case where the position of 0 motion with respect to a point of origin is (24,8).

Referring back to Fig. 9, a converter (selection means) 3 is supplied with a selected set of pixel data in the memories 11-(0,0) - 11- (3,3) of the search window memory unit 2. More specifically, pixel data constituting one of the pixel patterns in a search block distanced from the reference block position by a search vector are supplied to the converter 3. The converter 3 arranges the 16 pixels data items constituting the pixel pattern into a predetermined sequence so as to output the same to the pixel comparison units 13-(I,J), respectively, of an evaluator 4.

In the converter 3, a horizontal converter unit 14 is supplied, for each row J, with a set of pixel data items from the memories 111-(0,J) - 111-(3,J). Each of internal selector units 51-(0,J) - 51-(3,J) selects one pixel data item from the supplied set of pixel data items in accordance with the horizontal component of the search vector so as to output the selected pixel data item. A vertical converter unit 15 is configured such that internal selector units 52-(I,0) - 52-(I,3) are supplied with pixel data from the selector units 51-(I,0) - 51-(I,3) of the horizontal converter unit 14. Each of the selector units 52-(I, 0) - 52-(I,3) selects a pixel data item from the supplied set of pixel data items in accordance with the vertical component of the search vector so as to output the selected pixel data item.

In the selector units 51- (I,J) shown in Fig. 12, a selection signal generation unit 21 generates a selection signal having a value of Sh calculated according to expression (2) below. Sh=mod(int(24+x+p+4×I)/4,4)... (2) where I indicates the number assigned to each of the selector units 51-(I,J), x indicates a horizontal component of the search vector, and p indicates a horizontal offset of the pixel pattern. A selector 22 selects a value from a selected memory 11-(Sh,J) in accordance with the value Sh of the selection signal from the s election signal generation unit 21 so as to out put the selected value.

In the selector units 52-(I,J) shown in Fig. 13, a selection signal generation unit 26 generates a selection signal having a value of Sv calculated according to expression (3) below. Sv=mod(int(8+y+q+4*J)/4,4)...(3) where J indicates the number assigned to each of the selector units 52-(I,J), y indicates a vertical component of the search vector, and q indicates a vertical offset of the pixel pattern.

A selector 27 selects a value from a selected memory 51-(I,Sv) of the selector units 51 (I,J) in accordance with the value Sv of the selection signal from the selection signal generation unit 26.

Referring back to Fig. 9, a frame memory 5 stores pixel data of a current frame to be coded.

A reference memory unit 6 (first storage means) is provided with memories 16-(I,J) each storing a set of pixel data items at the same positions in a plurality of pixel patterns constituting one of blocks of 16 rows and 16 columns (reference blocks) resulting from dividing the current frame to be coded. There are as many number of memories 16-(I,J) as the number of pixels constituting a pixel pattern. When the reference block comprises a total of M pixel patterns, each of the memories 16-(I,J) stores a total of M pixel data items at the same position in the plurality of pixel patterns.

An evaluator 4 is provided with pixel comparison units 13- (I,J) that compares the pixel data from the memories 16-(I,J) of the reference memory unit 6 and the pixel data from the selector units 52-(I,J) of the converter 3.

A pixel pattern accumulator (detect ion means) 8 sequentially selects a horizontal component p and a vertical component q of an offset value of the pixel pattern so as to supply the values p and q to the search window memory unit 2, the converter unit 3 and the reference memory unit 6. A result of comparison in each of the pixel comparison units 13-(I,J) of the evaluator 4 is temporarily stored for each pixel pattern. The results of comparison for the entirety of pixel patterns constituting a block are output en bloc to a motion vector detector 7.

The motion vector detector 7 (detection means) sets an updated search vector in the search window memory unit 2 and the converter 3, based on the results of comparison for a block supplied from the pixel pattern accumulation unit 8. The motion vector detector 7 identifies an optimum search vector as a motion vector. For example, the motion vector detector 7 causes the pixel comparison units 13-(I, J) to calculate differences between two sets of pixel data and identifies a search vector that provides the minimum sum of absolute values of the differences.

A description will now be given of the operation according to the first embodiment.

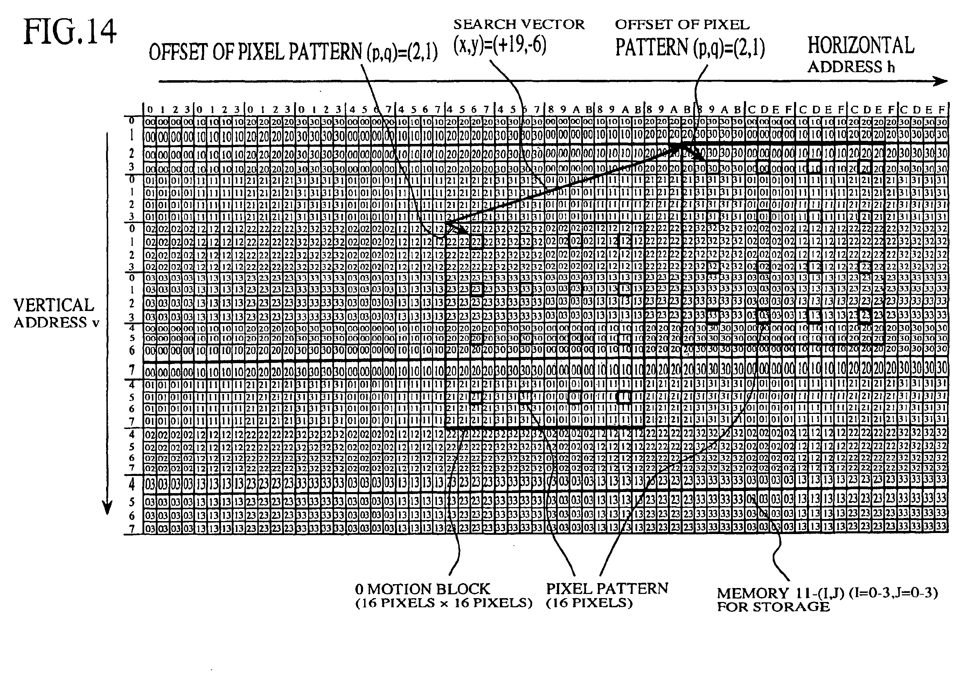

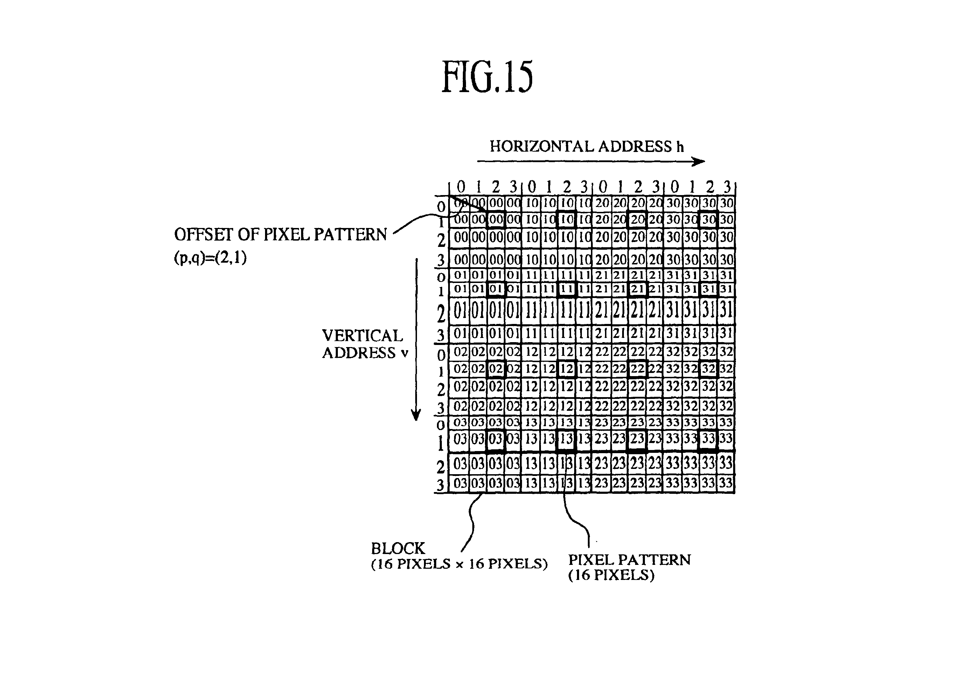

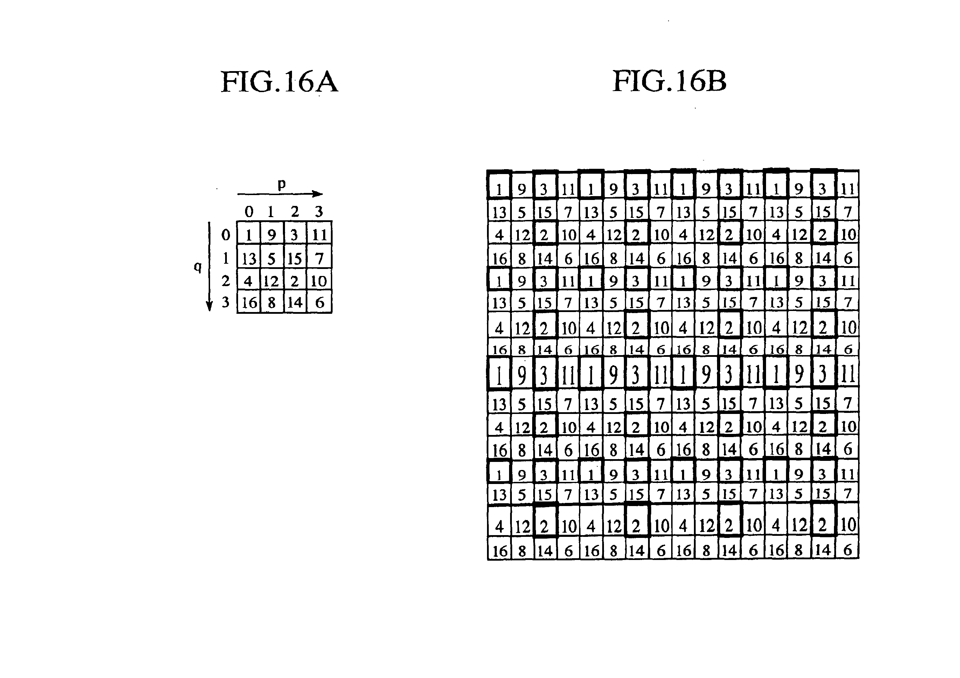

Fig. 14 shows an example of correspondence in a search window memory unit between addresses of pixel data and memories storing the pixel data, and an example of a pixel pattern in the search window. Fig. 15 shows an example of correspondence in a reference memory unit between addresses of pixel data and memories storing the pixel data, and an example of a pixel pattern in the search window. Fig. 16 shows a sequence of selection of pixel patterns.

The search window memory unit 2 (second storage mans, selection means) stores pixel data constituting a search, window of a coded frame in the coded frame memory 1, such that each memory stores a set of pixel data items at the same positions in a plurality of pixel patterns. The pixels constituting a pixel pattern are stored in different memories 11-(I,J).

As shown in Fig. 14, each of the memories 11-(I, J) in the search window memory unit 2 stores a set of pixel data at the same position in a plurality of pixel patterns constituting a segment block resulting from dividing the search window into blocks having the same size as the reference block. When the search window has a size of 64 pixels by 32 pixels, the reference block has a size of 16 pixels by 16 pixels and each of the pixels patterns comprises pixels distanced from each other by 3 pixels, as shown in Fig. 14, the search window is divided into 8 blocks divided into 8 individual blocks each comprising 2 pixels vertically and 4 pixels horizontally. The pixel data item at an address (I,J) (I=0,..., 3, J=0,...3) of each of the 16 areas ( 4 vertical pixels by 4 horizontal pixels) constituting each of the individual blocks (16 vertical pixels by 16 horizontal pixels) is stored in each of 16 memories 11-(I,J), respectively.

The read address operation unit 42 of the search window memory unit 2 calculates a read address A(I,J) for the memories 11-(I,J) according to expression (1), based on the offset (p,q) of the pixel pattern supplied from the pixel pattern accumulation unit 8 and the search vector (x, y) from the motion vector detector 7. The read address operation unit 42 outputs the read address to the selector 41. When pixel data are read, the read address is supplied to the memories 11-(I,J) via the selector 41 so that the pixel data at the address is supplied to the converter 3. Fig. 14 shows a search vector of (19,-6) and a pixel pattern of an offset (2,1).

The converter 3 arranges the pixel data constituting the pixel pattern and supplied from the search window memory unit 2 in a predetermined sequence so as to output the same to the pixel comparison units 13-(I,J) of the evaluator 4.

For each row J, the horizontal converter unit 14 is supplied with the pixel data from the memories 11-(0,J) - 11-(3,J) so that the internal selector units 51-(0,J) - 51-(3,J) selects a pixel data item from the entirety of pixel data items so as to output the selected data item to the vertical converter unit 15. In each of the selector units 51-(I,J), the selection signal having a value Sh calculated by the selection signal generation unit 21 according to expression (2) is supplied to the selector 22. The selector 22 selects the value from the selected memory 11-(Sh,J) in accordance with the value Sh of the selection signal.

In the converter 3, the internal selector units 52-(I,0) - 52-(I,3) of the vertical converter unit 15 are supplied with pixel data from the selector units 51-(I,0) - 51-(I, 3) of the horizontal converter unit 14, and selects a pixel data item from the supplied set of pixel data items in accordance with the vertical component of the search vector so as to out put the selected pixel data item. The selector 27 of the selector units 52-(I,J) is supplied with the selection signal having the value Sv calculated by the selection signal generation unit 26 according to expression ( 3). The selector 27 selects the value from the selector unit 51-(1,Sv) selected in accordance with the value Sv of the selection signal.

The pixel data constituting a pixel pattern selected in accordance with the search vector (x, y) and the offset ( p, q) are supplied to the evaluator 4.

The reference memory unit 6 reads from the coded frame memory 5 a set of pixel data items at the same positions in a plurality of pixel patterns constituting one of blocks of 16 rows and 16 columns (reference blocks) resulting from dividing the current frame to be coded, so as to store the pixel data items in each of the internal memories 16-(I,J). The pixels constituting a pixel pattern are stored in different memories 16-(I,J). As shown in Fig. 15, the reference memory unit 6 outputs the pixel pattern designated by the offset (p, q) (in the case of Fig. 15, p=2, q=1) from the image pattern accumulation unit 8 to the pixel comparison units 13-(I,J) of the evaluator 4 in the same sequence as the sequence of pixel data items supplied from the converter 3 to the evaluator 4.

The pixel comparison units 13-(I,J) of the evaluator 4 compare the pixel data from the memories 16-(I, J) of the reference memory unit 6 with the pixel data from the selector units 52-(I,J) of the converter 3 so as to output an evaluation, a result of comparison, to the pixel pattern accumulation unit 8. The evaluation may be a sum of absolute values of the differences between the pixel data from the memories 16-(I,J) of the reference memory unit 6 and the pixel data from the selector units 52-(I,J) of the converter 3. The evaluation may be a sum of squares of the differences between the pixel data.

The pixel pattern accumulation unit 8 selects the horizontal component p and the vertical component q of the offset value of the pixel pattern in a predetermined sequence so as to supply the values p, q to the search window memory unit 2, the converter 3, the reference memory unit 6. The evaluations from the pixel comparison units 13-(I,J) of the evaluator 4 for a set of offset values p, q are accumulated in the pixel pattern accumulation unit 8. The pixel pattern accumulation unit 8 outputs the evaluations for the pixel patterns in a block en bloc to the motion vector detector 7.

As shown in Fig 16(a), the pixel pattern accumulation unit 8 selects the offset values (p,q) of the pixel patterns in a unbiased manner. The pixel patterns selected according to the three sets of offset values are as shown in Fig. 16(b).

The motion vector detector 7 sets an updated search vector in the search window memory unit 2 and the converter 3 based on the evaluations for one block supplied from the pixel pattern accumulation unit 8, so as to output an optimum search vector as a motion vector .

Thus, according to the first embodiment, the reference memory uni t 6 stores the pixel data constituting a plurality of pixel patterns constituting a block. The search window memory unit 2 stores pixel data constituting a search window of a frame to be coded, such that each memory stores a set of pixel data items at the same positions in a plurality of pixel patterns each comprising a predetermined number of pixels distanced from each other in a search window by predetermined intervals. The search window memory unit 2 and the converter 3 select a pixel pattern in accordance with the search vector from the motion vector detector 7. The valuation unit 4 performs pixel by pixel comparison between the selected pixel pattern and the corresponding pixel pattern stored in the reference memory unit 6. The pixel pattern accumulation unit 8 is supplied with results of comparison in the evaluator 4, for a plurality of pixel patterns. The motion vector unit 7 detects a motion vector, based on the results of comparison. With this construction, pixels used in a step of comparison are distributed over the entire area of a block including those pixels. As a result, a result of comparison in a pixel pattern is similar to a result of comparison for the block as a whole. It is not always necessary to perform comparison for the entirety of pixel patterns constituting the block, especially when a relatively low precision is required for a result of comparison. Accordingly, results of comparison are obtained for the blocks in a relatively short period of time so that a motion vector is detected in a relatively short period of time.

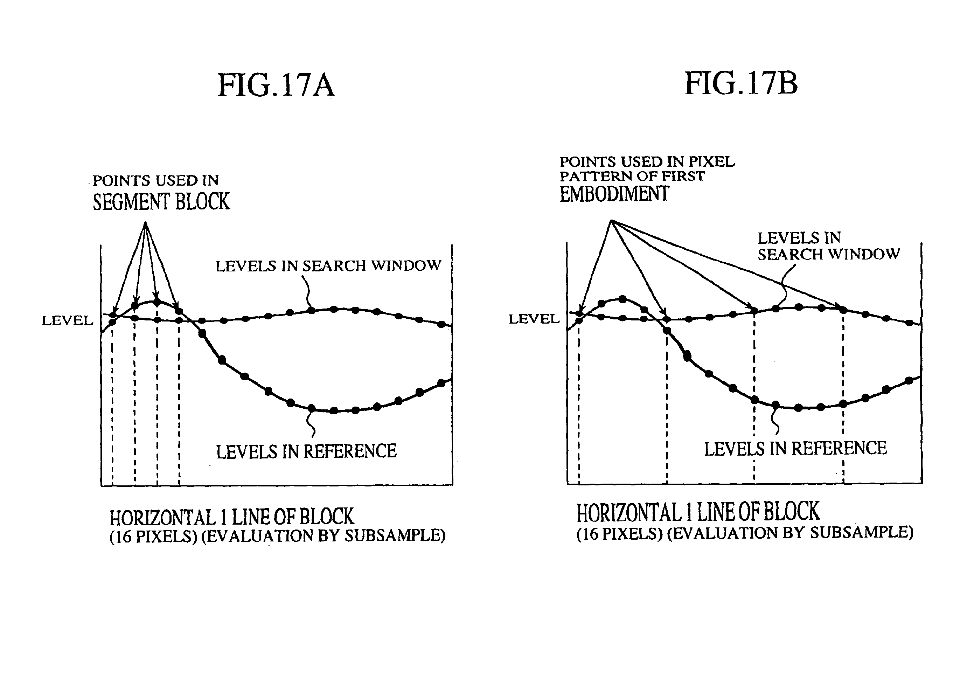

Fig. 17 shows an example of pixels used in a segment block approach and pixels used in a pixel pattern approach. As shown in Fig. 17, when comparison is performed for a segment block (Fig. 17(a)), pixel data are locally referred to in a block. When comparison is performed for a pixel pattern (Fig. 17(b)), as in the first embodiment described above, pixel data are uniformly referred to in a block.

Second embodiment

The motion vector detection apparatus according to the second embodiment is configured such that evaluations for a pixel pattern are accumulated using a plurality of search vectors. The accumulation of evaluations is aborted for a search vector that provides a small value of accumulated total of evaluations. The search vector causing the abort ion is eliminated from a group of candidates for a motion vector .

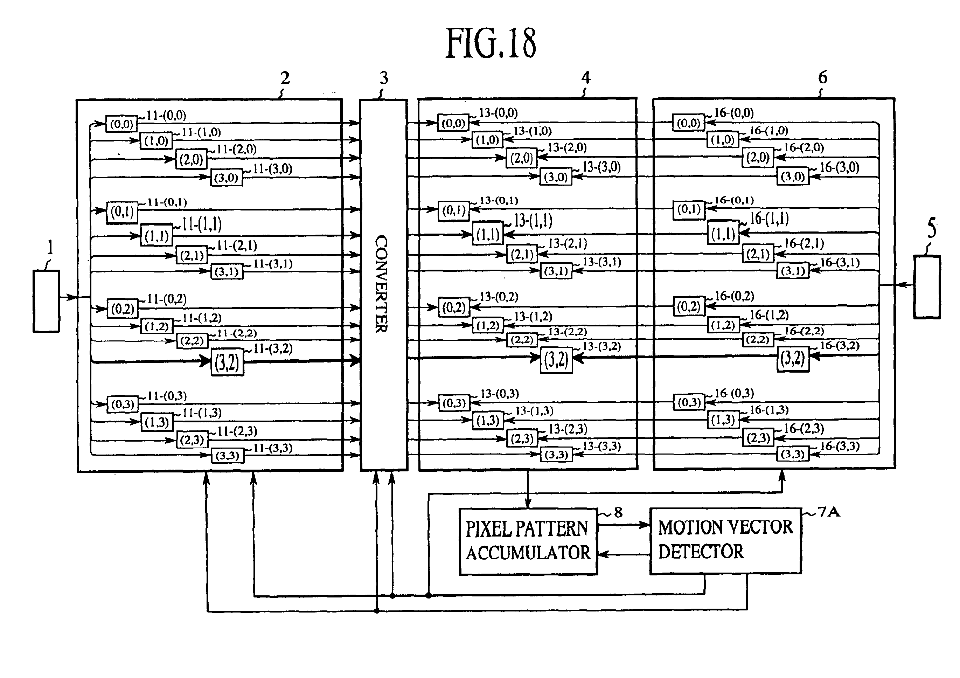

Fig. 18 is a block diagram showing a construction of a motion vector detection apparatus according to the second embodiment. Referring to Fig. 18, a motion vector detector 7A (detection means, search vector narrowing-down means ) is capable of operating in the same manner as the motion vector detector 7. Moreover, the motion vector detector 7A is also capable of aborting a process in the converter 3 and the evaluator 4 for a search vector, even before the calculation of evaluations by the evaluator 4 is completed for the entirety of pixel patterns or the entirety of segment blocks using a search vector, depending on the evaluations accumulated for pixel patterns up to then. The search vector that caused the abortion is eliminated by the motion vector detector 7A from a group of candidates for a motion vector.

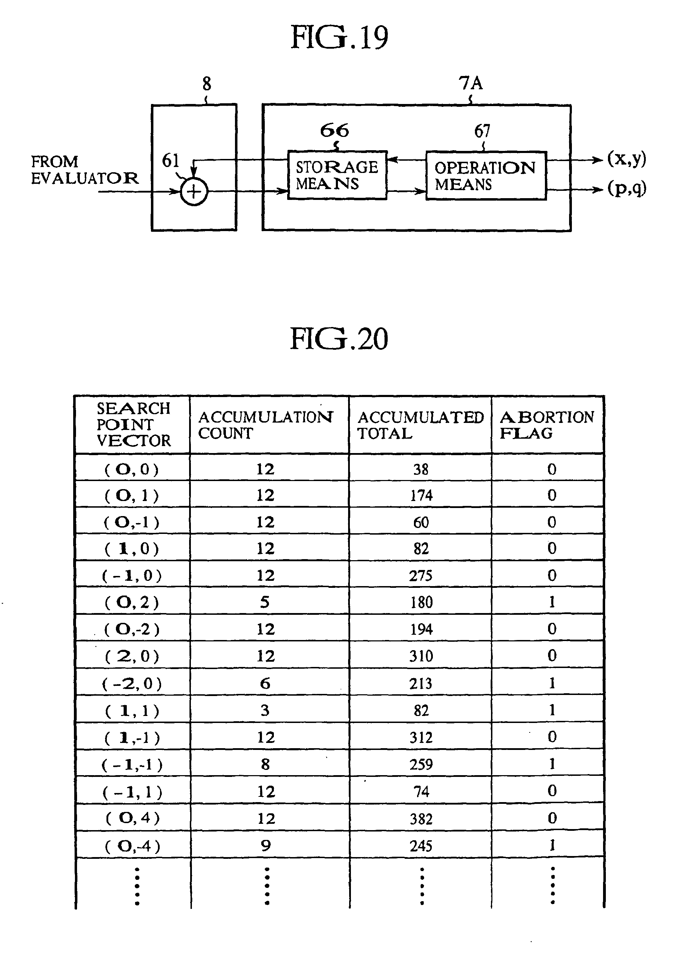

Fig. 19 is a block diagram showing a construction of the motion vector detector 7A and the pixel pattern accumulation unit 8 according to the second embodiment. Referring to Fig. 19, an adder 61 adds the evaluation from the evaluator 4 and an accumulated total of past evaluations from a storage means 66. The storage means 66 is implemented by a register, a memory or the like storing an accumulation count and an accumulated total of evaluations for each search vector. An operation means 67 is implemented by a sequence, a process or the like determining a search vector for which a step of calculation of evaluation is aborted, based on the accumulation count and the accumulated total of evaluations for a search vector.

The other components shown in Fig. 18 are the same as the corresponding components off the first embodiment so that the description thereof is omitted.

A description will now be given of the operation according to the second embodiment.

The motion vector detector 7A does not request a sequential calculation of an accumulation of evaluations for the entirety of pixel patterns for a search vector. Instead, the search vector (x,y) is made to vary for a given off set (p, q) of a pixel pattern. A plurality of search vectors are used in parallel in calculat ion for each offset (p, q) of a pixel pattern.

The operation means 67 makes the search vector (x,y) to vary for each offset (p,q) of a pixel pattern. The offset (p,q) is supplied to the search window memory unit 2, the converter 3 and the reference memory unit 2. The search vector (x, y) is supplied to the sear ch window memory unit 2 and the converter 3. The accumulated total of evaluations for the search vector is supplied from the storage means 66 to the adder 61.

The evaluation for the off set and the search vector is supplied from the evaluator 4 to the adder 61, where an accumulated total of evaluations is calculated. The accumulated total of evaluations stored in the storage means 66 is updated with the calculated value. Fig. 20 shows an example of accumulation count and accumulated total of evaluations stored in the storage means 66 for each of search vectors.

The operation means 67 selects a search vector for which a step of accumulation of evaluations is aborted, based on the accumulated total of evaluations for a search vector. For the selected search vector, the subsequent calculation of an evaluation is not performed so that the search vector is eliminated from a group of candidates for a motion vector.

The operation of the other constituting elements according to the second embodiment is the same as the corresponding operation according to the first embodiment so that the description thereof is omitted.

Thus, according to the second embodiment, the motion vector detector 7A sequentially selects a plurality of search vectors for each pixel pattern. For each selected search vector, pixel by pixel comparison is performed for the pixel pattern. Depending on the results of comparison for the pixel pattern up to a certain point of time, subsequent steps of comparison for the pixel pattern and for the selected search vector is aborted without completing the comparison for the entirety of pixel patterns for the selected search vector. The search vector that caused the abortion is eliminated from a group of candidates for a motion vector. A motion vector is detected based on the result of comparison for the remaining search vectors. By aborting the comparison for a search vector which is not likely to be identified as a motion vector, the volume of computation required until a motion vector is detected is reduced and a motion vector is detected in a relatively short period of time.

A similar advantage is available by dividing a block into a plurality of segment blocks as in the related art instead of into a plurality of pixel patterns and accumulating evaluations using a plurality of search vectors for a segment block such that the accumulation of evaluations is aborted for a search vector providing a relatively small accumulated total of evaluations and the search vector that caused the abortion is eliminated from a group of candidates for a motion vector.

Third embodiment

The motion vector detection apparatus according to the third embodiment is configured such that the operation means 67 of the motion vector detector 7A selects a search vector for which a step of accumulation of evaluations is aborted, based on the accumulated total of evaluations for a search vector at a given accumulated count. The search vector selected is eliminated from a a group of candidates for a motion vector.

The other aspects of the construction of the motion vector detection apparatus according to the third embodiment are the same as the corresponding aspects according to the second embodiment so that the description thereof is omitted.

A description will now be given of the operation according to the third embodiment.

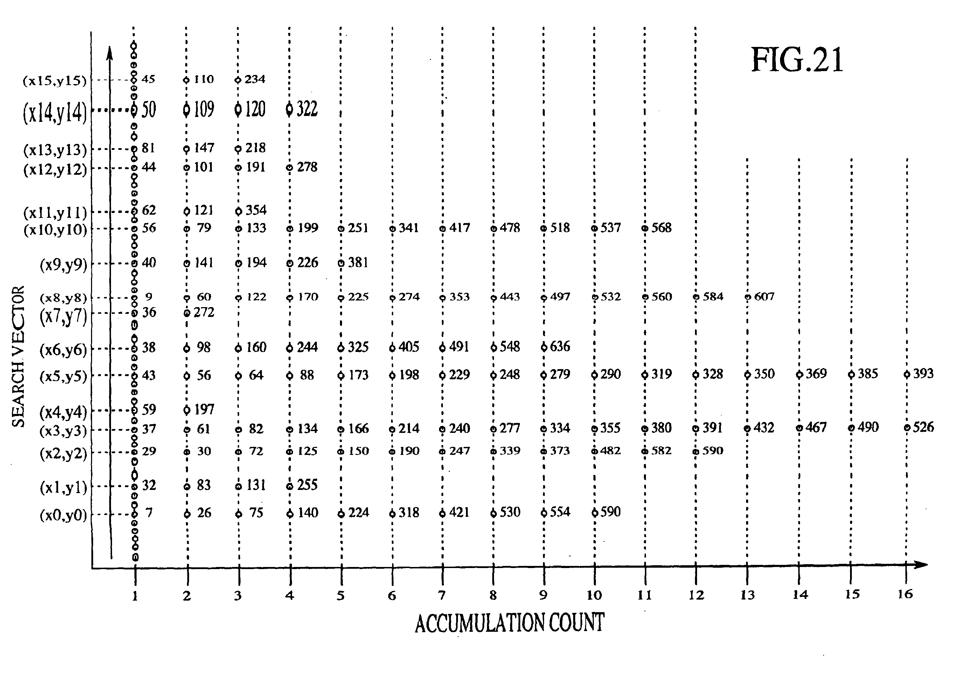

Fig. 21 illustrates an example of how accumulation of evaluations is aborted according to a third embodiment of the present invention.

Subsequent to a first step of accumulation of evaluations for a predetermined number of search vectors, the operation means 67 of the motion vector detector 7A eliminates search vectors other than 16 search vectors providing smallest evaluations. For example, referring to Fig. 21, accumulation of evaluations is aborted for search vectors other than search vectors (x0,y0) -(x15,y15).

The operation means 67 of the motion vector detector 7A then initiates a second and subsequent steps of accumulation of evaluations for the 16 search vectors.

For second through eighth steps of accumulation, subsequent to each step of accumulation of evaluations, the operation means 67 aborts the accumulation of evaluations for a search vector providing an accumulated total in excess of 1.5 times an average of accumulated totals of evaluations for the valid search vectors for which a step of accumulation of evaluations is continued. For example, referring to Fig. 21, subsequent to a second step of accumulation, the accumulation of evaluations for the search vector (x4,y4) and the search vector (x7, y7) is aborted. Subsequent to a third step of accumulation, the accumulation of evaluations for the search vector (x11,y11), the search vector (x13,y13) and the search vector (x15,y15) is aborted. Subsequent to a fourth step of accumulation, the accumulation of evaluations for the search vector (x1,y1), the search vector (x12,y12) and the search vector (x14,y14) is aborted. Subsequent to a fifth step of accumulation, the accumulation of evaluations for the search vector (x9,y9) is aborted.

Subsequent to a ninth step of accumulation, of the valid search vectors for a step of accumulation of evaluations is continued, the operation means 67 aborts the accumulation of evaluations for a search vector providing the maximum accumulated total of evaluations. When the number of search vectors for which a step of accumulation of evaluations is 2, the abortion of the accumulation of evaluations for a search vector is not performed. Of the remaining 2 search vectors, the search vector providing the minimum value of evaluation is identified as a motion vector.

For example, referring to Fig. 21, subsequent to a ninth step of accumulation of evaluations, the accumulation of evaluations for the search vector (x6,y6) is aborted. Subsequent to a tenth step of accumulation, the accumulation of evaluations for the search vector (x0,y0) is aborted. Subsequent to an eleventh step of accumulation, the accumulation of evaluations for the search vector (x10,y10) is aborted. Subsequent to a twelfth step of accumulation, the accumulation of evaluations for the search vector (x2,y2) is aborted. Subsequent to a thirteenth step of accumulation, the accumulation of evaluations for the search vector (x8,y8) is aborted. Accordingly, in the second and subsequent steps, a total of 101 (=16+14+11+8+7+7+7+7+6+5+4+3+2+2+2) steps of accumulation of evaluations are only required.

The operation of the other constituting elements according to the third embodiment is the same as the corresponding operation according to the second embodiment so that the description thereof is omitted. The condition for aborting the accumulation of evaluations is not limited to the one described above. The number of search vectors used at the first step or the last step may of course be changed.

Thus, according to the third embodiment, the operation means 67 of the motion vector detect ion means 7A selects a search vector for which a step of accumulation of evaluations is aborted, based on the accumulated total of evaluations for a search vector at a given accumulated count so that the search vector selected is eliminated from a a group of candidates for a motion vector. Accordingly, the process required for the abortion of accumulation of evaluations is simplified.

Fourth embodiment

A motion vector detection apparatus according to the fourth embodiment is a variation of the apparatus according to third embodiment in that accumulated totals of evaluations for a plural ity of search vectors are arranged in the ascending order or the descending order for storage. One or a plurality of search vectors are eliminated from a group of candidates for a motion vector based on the rank of evaluation in the order.

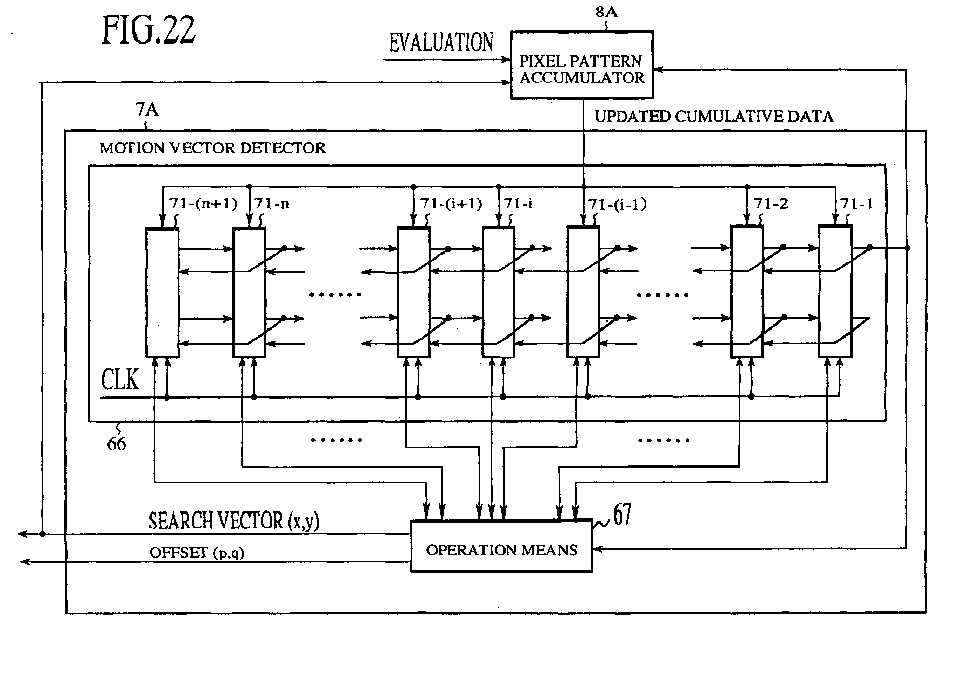

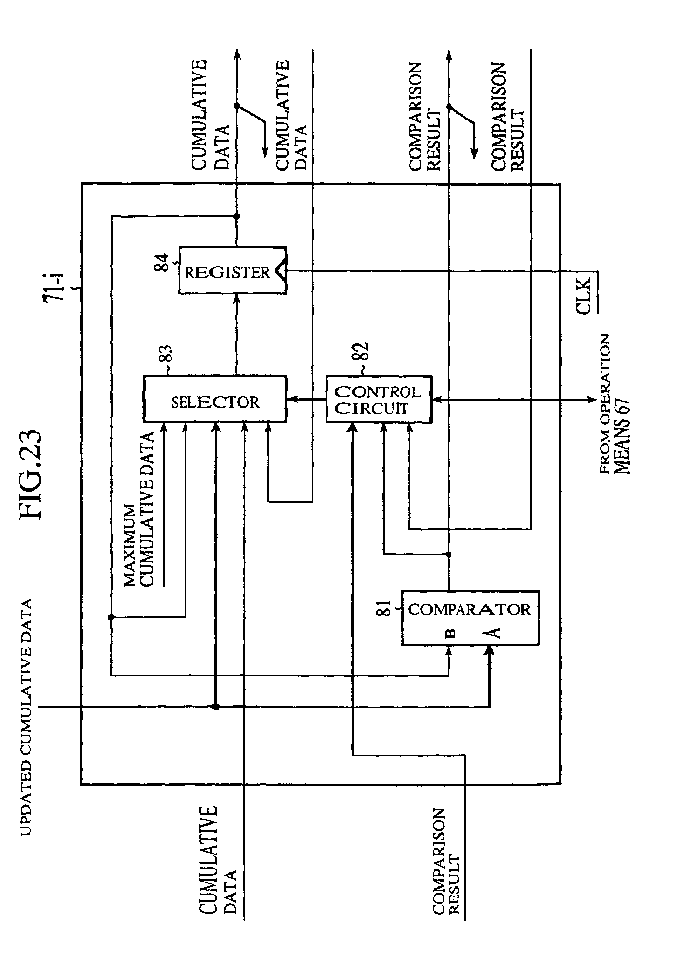

Fig. 22 is a block diagram showing a construction of the motion vector detector 7A, the pixel pattern accumulator 8A and the storage means 66 according to the fourth embodiment. In the motion vector detector 7A shown in Fig. 22, storage units 71-1 - 71-(n+1) constitute shift registers that implement the storage means 66. For example, a total of 17 storage units are provided. Fig. 23 is a block diagram showing a construct ion of each storage unit in Fig. 22. In the storage unit 71 shown in Fig. 23, a comparator 81 compares an accumulated total E (i) with an accumulated total E (new), the accumulated total E(i) being included in cumulative data stored in a register 84 and the accumulated total E(new) being included in cumulative data from the pixel pattern accumulator 8A. A control circuit 82 generates a selection signal for selecting from a group comprising cumulative data from the preceding storage uni t 71-(i-1), cumulative data from the sub sequent storage unit 71-(i+1), cumulative data in the storage unit 71-i in which the control circuit 82 is built, updated cumulative data from the pixel pattern accumulator 8A and cumulative data that includes an accumulated total having a predetermined maximum value. The selection by the selection signal is based on a result of comparison from the comparator 81 o f the storage unit 71-i in which the control circuit 82 is built, a result of comparison from the comparator 81 in the preceding storage unit 71-(i-1), and a result of comparison from the comparator 81 in the subsequent storage unit 71-(i+1). A selector 83 selects one of the group of cumulative data based on the selection signal from the control circuit 82. A register 84 stores cumulative data.

Referring to Fig. 22, the pixel pattern accumulator 8A is supplied with an evaluation from the evaluator 4 and with the cumulative data from the first storage unit 71-1 of the storage means 66. The pixel pattern accumulator 8A produces updated cumulative data by calculating a sum of an accumulation of evaluations included in the cumulative data from the storage unit 71-1 and the evaluation from the evaluator 4. A result of accumulation is supplied to the storage units 71-i.

The other aspects of the construction according to the fourth embodiment are the same as the corresponding aspects according to the second embodiment so that the description thereof is omitted.

A description will now be given of the operation according to the fourth embodiment.

In an initial state, the operation means 67 controls the control circuit 82 of the storage units 71-i to cause the selector 83 to select cumulative data that includes a predetermined maximum value and cause the register 84 to select the selected cumulative data.

A description will now be given of the operation of the motion vector detector 7A performed in a first step of accumulating evaluations for a total of n search vectors . The pixel pattern accumulator 8A supplies updated cumulative data that includes the evaluation from the evaluator 4, the current search vector, and the accumulation count (=1) to the comparators 81 of the storage units 71-1 - 71-(n+1) and to the select or 83.

The comparator 81 of the storage units 71-i compares the accumulated total E(i) included in the cumulative data stored in the register 84 with the accumulated total E(new) included in the cumulative data from the pixel pattern accumulator 8A. A result of comparison, i.e., an indication of whether E(i)>E(new), is supplied to the control circuit 82 and to the control circuit 82 of the preceding and subsequent storage units 71-(i-1), 71-(i+1).

When the relationship E(i) >E(new) does not hold, the control circuit 82 generates a selection signal for selecting the cumulative data stored in the register 84. When E (i)>E(new) and the relationship E(i-1)>E (new) does not hold, where i>1, the control circuit 82 generates a selection signal for selecting the updated cumulative data from the pixel pattern accumulator 8A. When E(i-1)>E(new), where i>1, the control circuit 82 generates a selection signal for selecting the cumulative data from the register 84 of the preceding storage unit 71-(i-1). The selection signal generated by the control circuit 82 to the selector 83. The selector 83 selects the cumulative data from the register 84, the cumulative data from the pixel pattern accumulator 8a, the cumulative data from the storage unit 71-(i-1) to the right of the storage unit 71-i of Fig. 22, the cumulative data from the storage unit 71-(i+1) to the left of the storage unit 71-i so as to supply the selected cumulative data to the register 84. The register 84 updates the cumulative data stored therein with the supplied cumulative data in synchronization with a predetermined clock signal CLK.

With this, subsequent to a first step of accumulation of evaluations, evaluations for a total of n search vectors are stored in the storage means 66 in the ascending order.

A description will now be given of the operation of the motion vector detection unit 7A in a second and subsequent steps of accumulation of evaluations. The first storage unit 71-1, i. e, the storage unit storing the cumulative data that includes the minimum accumulated total, supplies the cumulative data to the operation means 67 and the pixel pattern accumulator 8A.

The operation means 67 designates the search vector included in the cumulative data therein and also designates a next pixel pattern, so that an evaluation is calculated. When the evaluation is supplied from the evaluator 4, the pixel pattern accumulator 8A generates updated cumulative data by adding an accumulation of evaluations included in the cumulative data from the storage means 66 and the evaluation from the evaluator 4 while increasing the accumulation count by one. The updated cumulative data is supplied to the storage units 71-i.

The operation means 67 controls the control circuits 82 of the storage units 71-1 - 71-(n+1) so as to cause the register 84 of the (n+1)th storage unit 71-(n+1) to store the updated cumulative data. The operation means 67 shifts the cumulative data stored in the registers 84 of the storage units 71-1 - 71-(n+1) such that the cumulative data stored in the register 84 of the storage unit 71-(i+1) (i=1,...n) is stored in the register 84 of the storage unit 71-i.

At this point of time, the storage units 71-1 - 71-(n-1) store the cumulative data with the accumulation count 1, while the storage unit 71-n stores the cumulative data with the accumulation count 2.

The cumulative data, which includes the minimum value of accumulated total in a group of cumulative data with the accumulation count 1 is supplied from the first storage unit 71-1 to the operation means 67 and the pixel pattern accumulator 8A.

The operation means 67 designates the search vector included in the cumulative data therein, and also designates a next pixel pattern so that an evaluation is calculated. When the evaluation is supplied from the evaluator 4, the pixel pattern accumulator 8A generates updated cumulative data by adding an accumulation of evaluations included in the cumulative data from the storage means 66 and the evaluation from the evaluator 4 while increasing the accumulation count by one. The updated cumulative data is supplied to the storage units 71-i.

The operation means 67 controls only the control circuit 82 of the storage uni t 71-n storing the cumulative data with the accumulation count 2 so that a determination is made as to whether an updated accumulated total E (new) included in the updated cumulative data is greater than the accumulated total E(n) in the register 84. If it is determined that the updated accumulated total E (new ) is greater than the accumulated total E(n) in the register 84, the cumulative data in the register 84 of the storage units 71-2 - 71-n is sequentially stored in the register 8 4 of the storage units 71-1 - 71-(n-1). The operation means 67 also causes the updated cumulative data to be stored in the register 84 of the storage unit 71-n. When it is determined that the updated accumulated total E(new) is smaller than the accumulated total E(n) in the register 84, the operation means 67 shifts the cumulative data in the register 84 of the storage units 71-2 - 71-(n-1) so as to store the same in the register 84 of the storage units 71-1 - 71-(n-2). The operation means 67 also causes the update cumulative data in the register 84 of the storage unit 71-(n-1).

At this point of time, the storage units 71-1 - 71- (n-2) store the cumulative data with the accumulation count 1 and the storage units 71-(n-1) and 71-n store the cumulative data with the accumulation count 2.

An evaluation is similarly calculated for an mth search vector sequentially shifted to the storage unit 71-1 so as to generate the updated cumulative data. The operation means 67 controls only the control unit 82 of the storage units 71-(n-m+1) - 71-n storing the cumulative data with the accumulation count 2. When it is determined that the update accumulated total E(new) is greater than the accumulated total E(j ) (j=n-m+1,...,n-1) and the updated accumulated total E(new) is smaller than the accumulated total E(j +1) in the register 84 (or when the updated accumulated total E(new) is greater than the accumulated total E(j) (j=n) in the register 84), the cumulative data in the registers 84 of the storage units 71-2 - 71-j are shifted so that the registers 84 of the storage units 71-1 - 71-(j-1). The updated cumulative data is stored in the register 84 of the storage unit 71-j. By repeating the above process until the nth search vector is shifted (i.e. until m=n) to the storage until 71-1, a second step of accumulation of evaluations is completed, resulting in the storage units 71-1 - 71-n storing a total of n sets of cumulative data with the accumulation count 2 in the ascending order.

When the cumulative data with the accumulation count 1 has been supplied for the entirety of a total of n search vectors, the operation means 67 makes a determination as to whether a predetermined condition is met for the accumulated total included in the cumulative data so as to determine a search vector for which a step of accumulation of evaluations is aborted. When there is a search vector for which a step of accumulation of evaluations is aborted, the operation means 67 updates the number of search vectors n to (n-D), where D indicates the number of search vectors for which a step of accumulation of evaluations is aborted.

A third and subsequent steps of accumulation are performed in a similar manner as the second step.

Thus, according to the fourth embodiment, accumulated totals of evaluations for a plurality of search vectors are arranged in the ascending order or descending order. One or a plurality of search vectors are eliminated from a group of candidates for a motion vector, based on the rank of evaluation in the order. Accordingly, in selecting a search vector for which a step of accumulation is aborted, it is not necessary to refer to the accumulated totals of evaluations for the entirety of search vectors. Thus, it is possible to select a search vector for which a step of accumulation is aborted efficiently.

Fifth embodiment

In a motion vector detection apparatus according to the fifth embodiment, the evaluator 4 evaluates a plurality of search vectors and a search vector corresponding to the minimum value of accumulation of evaluations or the maximum value of accumulation of evaluations is selected. Accumulation of evaluations is performed for the selected search vector. When the accumulation count providing the maximum value or the minimum value matches a predetermined count, the search vector is identified as a candidate for a motion vector.

The other aspects of the construction of the motion vector detection apparatus according to the fifth embodiment are similar to the corresponding aspect s of the second embodiment. A difference from the second embodiment is in the operation of the motion vector detector 7A.

A description will now be given of the operation according to the fifth embodiment.

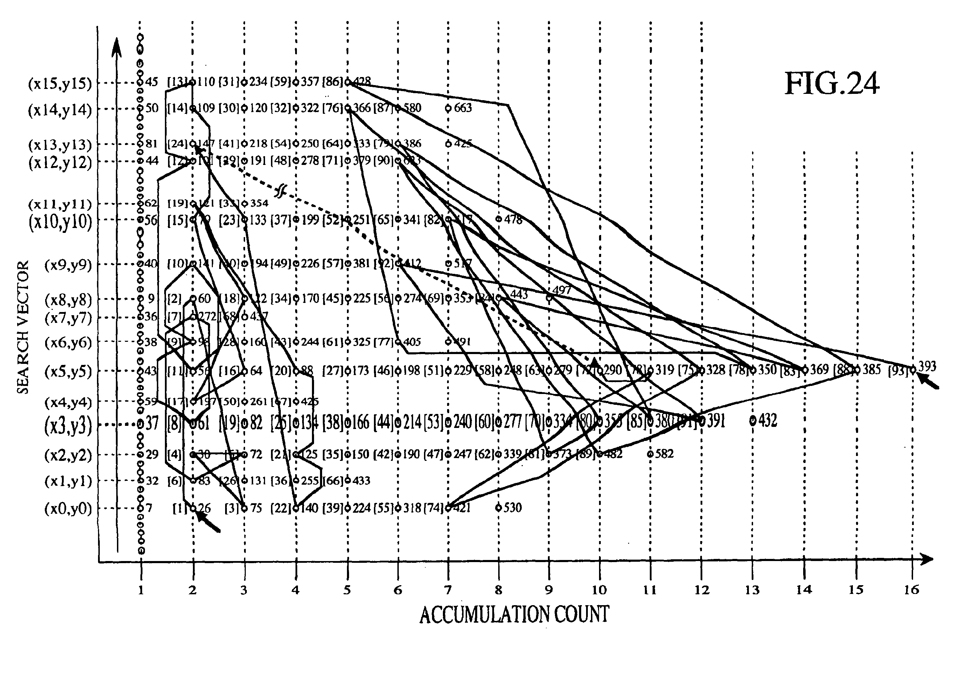

Fig. 24 shows a sequence of accumulation of evaluations according to a fifth embodiment of the present invention.

The operation means 67 of the motion vector detect or 7A eliminates search vectors other than 16 search vectors providing small evaluation values, after a first step of accumulation of evaluations for a predetermined number of search vectors.

The operation means 67 of the motion vector detector 7A then initiates a second and subsequent steps of accumulation of evaluations for the 1 6 search vectors.

In a second and subsequent steps of accumulation of evaluations, the operation means 67 selects a search vector providing the minimum accumulated total of evaluations irrespective of the accumulation count. A next pixel pattern is designated for the selected search vector using an offset so that an evaluation is calculated for the selected search vector so that a resultant evaluation updates the accumulated total of evaluations for the selected search vector.

The operation means 67 continues to accumulate evaluations for the search vector providing the minimum value of accumulated total for success ive pixel patterns so as to update the accumulated total of evaluations until a search vector, providing the minimum value of accumulated total of evaluations with an accumulation count equal to a predetermined count (which is the same as the number of pixel patterns), is identified. The search vector thus identified is designated as a motion vector.

As shown in Fig. 24, search vectors for which an evaluation is calculated are successively selected in the illustrated sequence determined by the ascending order of accumulated totals (shown in parentheses) in a second and subsequent steps of accumulation of evaluations. In a 93th step of accumulation, the search vector (x5,y5) with the accumulation count equal to the number of pixel patterns (=16) and having, of the entirety of the vectors being arranged, the minimum accumulated total occurs. The search vector (x5,y5) is then identified as a motion vector. Thus, in a second and subsequent steps, only a total of 93 steps are required to process the accumulation of evaluations.

The operation of the other constituting elements according to the fifth embodiment is the same as the corresponding operation according to the second embodiment so that the description thereof is omitted. The number of search vectors subject to the first and second steps of accumulation of evaluations may be changed. In the example described, the search vector providing the minimum evaluation value is identified as a motion vector. The motion vector providing the maximum evaluation value may be identified as a motion vector depending on how the evaluation is calculated.

As described, according to the fifth embodiment, the evaluator 4 evaluates a plurality of search vectors and a search vector corresponding to the minimum value of accumulation of evaluations or the maximum value of accumulation of evaluations is selected. Accumulation of evaluations is performed for the selected search vector. When the accumulation count providing the maximum value or the minimum value matches a predetermined count, the search vector is identified as a candidate for a motion vector. Accordingly, a search vector likely to be identified as a motion vector continues to be processed in a step of accumulation of evaluations ahead of other search vectors so that a motion vector is detected in a relatively short period of time. Since a search vector providing the minimum accumulated total is selected, it is ensured that the search vector providing the minimum accumulated total with a predetermined accumulation count is selected as a motion vector.

Sixth embodiment

A motion vector detection apparatus according to the sixth embodiment is a variation of the apparatus according to fifth embodiment in that accumulated totals of evaluations for a plurality of search vectors are arranged in the ascending order or the descending order for storage. The search vector at the head of the arrangement is selected. Accumulation of evaluations is performed for the selected search vector. The accumulated totals of evaluations for the plurality of search vectors are re-arranged in the ascending order or the descending order. When the accumulation count for the accumulated total of evaluations at the head of the arrangement is a predetermined count, the associated search vector is identified as a motion vector.

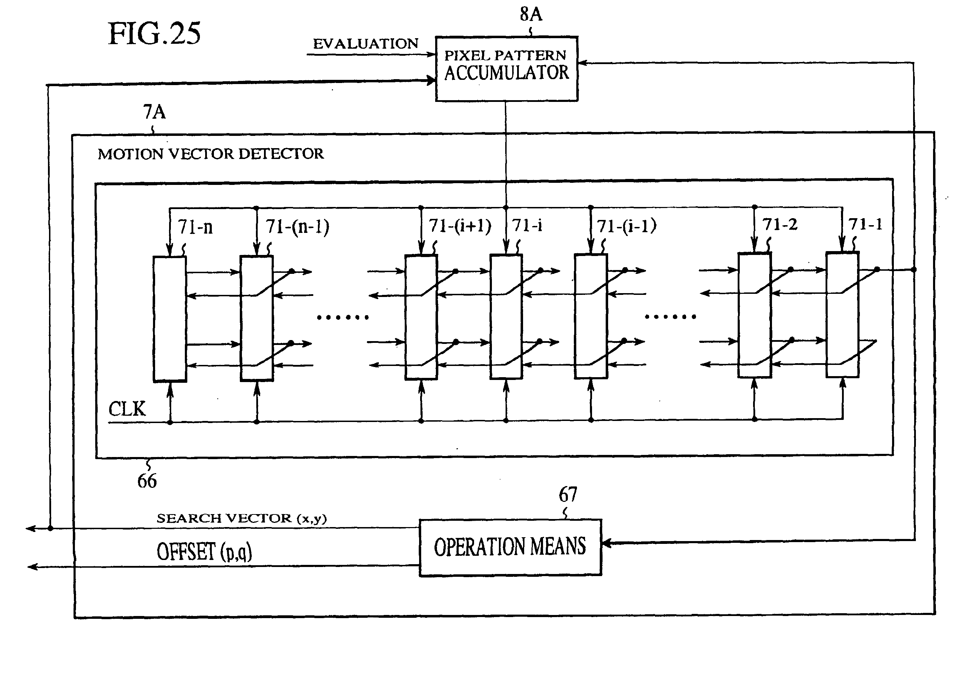

Fig. 25 is a block diagram showing a construction of the motion vector detector 7A in a motion vector detection apparatus according to the sixth embodiment. Referring to Fig. 25, a total of n (for example, n=16) storage units 71-1 - 71-n constitute shift registers for storing a total of n cumulative data items so that the accumulated totals of evaluations for search vectors are arranged in the ascending order. The operation means 67 causes accumulation of evaluations to be performed for the search vector designated by the cumulative data in the storage unit 71-1. Accumulated totals of evaluations for a plurality of search vectors are re-arranged in the ascending order. When the accumulated count for the accumulated total at the head of the arrangement is a predetermined count, the associated search vector is identified as a motion vector.

The other constituting elements in the motion vector detection apparatus according to the sixth embodiment are the same as the corresponding elements according to the fifth embodiment so that the description thereof is omitted. The storage 7 1-i is similar to the storage unit 71-i shown in Fig. 23.

A description will now be given of the operation according to the sixth embodiment.

In an initial state, the operation means 67 controls the control circuit 82 of the storage units 71-i to cause the selector 83 to select cumulative data that includes a predetermined maximum value and cause the register 84 to select the selected cumulative data.

A description will now be given of the operation of the motion vector detector 7A performed in a first step of accumulating evaluations. The operation means 67 designates a first pixel pattern for search vectors so that evaluations for the search vectors are successively calculated in a first step of accumulation. The evaluations are supplied from the evaluator 4 to the pixel pattern accumulator 8A. The pixel pattern accumulator 8A supplies updated cumulative data that includes the evaluation from the evaluator 4, the current search vector, and the accumulation count (=1) to the comparators 81 of the storage units 71-1 - 71-n and to the selector 83.

The comparator 81 of the storage units 71-i compares the accumulated total E(i) included in the cumulative data stored in the register 84 with the accumulated total E(new) included in the cumulative data from the pixel pattern accumulator 8A. A result of comparison, i.e., an indication of whether E(i)>E(new), is supplied to the control circuit 82 and to the control circuit 82 of the preceding and subsequent storage units 71-(i-1), 71- (i+1).

When the relationship E(i)>E ( new) does not hold, the control circuit 82 generates a selection signal for selecting the cumulative data stored in the register 84. When E(i)>E(new) and the relationship E(i-1)>E (new) does not hold, where i>1, the control circuit 82 generates a selection signal for selecting the updated cumulative data from the pixel pattern accumulator 8A. When E(i-1)>E(new) , where i>1, the control circuit 82 generates a selection signal for selecting the cumulative data from the register 84 of the preceding storage unit 71-(i-1). The selection signal generated by the control circuit 82 to the selector 83. The selector 83 selects the cumulative data from the register 84, the cumulative data from the pixel pattern accumulator 8a or the cumulative data from the storage unit 71-(i-1), 71-(i+1) of the preceding stage unit so as to supply the selected cumulative data to the register 84. The register 84 updates the cumulative data stored therein with the supplied cumulative data in synchronization with a predetermined clock signal CLK.

With this, subsequent to a first step of accumulation of evaluations, evaluations for a total of n search vectors are stored in the storage means 66 in the ascending order.

A description will now be given of the operation of the motion vector detection unit 7A in a second and subsequent steps of accumulation of evaluations.

In the second and subsequent steps of accumulation of evaluations, the operation means 67 uses an offset to specify a next pixel pattern for the search vector designated by the cumulative that includes a minimum accumulated total , i.e. the cumulative data stored in the storage unit 71-1 at the head of the arrangement so that the evaluation is calculated. The evaluation is supplied from the evaluator 4 to the pixel pattern accumulator 8A. The pixel pattern accumulator 8A supplies the updated cumulative data to the comparator 81 and the selector 83 of the storage units 71-1 - 71-n.

The comparator 81 of the storage units 71-i compares the accumulated total E (i) included in the cumulative data stored in the register 84 with the accumulated total E(new) included in the cumulative data from the pixel pattern accumulator 8A. A result of comparison, i.e., an indication of whether E(i)>E (new), is supplied to the control circuit 82 and to the control circuit 82 of the preceding and subsequent storage units 71-(i-1), 71-(i+1).

When the relationship E (i) >E(new) does not hold, the control circuit 82 of the storage unit 71-i (i=1,..., n-1) generates a selection signal for selecting the cumulative data from the storage unit 71-(i+1) in the subsequent stage. When the relationship E(i)>E (new) does not hold and the relationship E (i+1) >E (new) holds, the control circuit 82 generates a selection signal for selecting the updated cumulative data from the pixel pattern accumulator 8A. When E(i)>E(new) and E(i+1)>E(new), the control circuit 82 generates a selection signal for selecting the cumulative data in the register 84. When the relationship E(n)>E(new) does not hold, the control circuit 82 of the storage unit 71-n generates a selection signal for selecting the updated cumulative data from the pixel pattern accumulator 8A. The selection signal generated by the control circuit 82 to the selector 83. The selector 83 selects the cumulative data from the register 84, the cumulative data from the pixel pattern accumulator 8a or the cumulative data from the storage unit 71-(i+1) of the subsequent stage so as to supply the selected cumulative data to the register 84. The register 84 updates the cumulative data stored therein with the supplied cumulative data in synchronization with a predetermined clock signal CLK.

In a second and subsequent steps of accumulation of evaluations, successive steps of accumulation of evaluations for a selected search vector providing a minimum accumulated total are performed. The updated cumulative data for the search vector is supplied to the storage means 66 so that the original cumulative data for the search vector is discarded. A total of n cumulative data items are arranged in the ascending order.

The operation of other constituting elements is the same as the operation according to the fifth embodiment so that the description there of is omitted. While it is assumed that the cumulative data are arranged in the ascending order of accumulated totals of evaluations, the cumulative data may be arranged in the descending order depending on how the evaluation is calculated.

Thus, according to the sixth embodiment, accumulated totals of evaluations for a plurality of search vectors are arranged in the ascending order or the descending order for storage. The search vector at the head of the arrangement is selected. Accumulation of evaluations is performed for the selected vector. The accumulated totals of evaluations for the plurality of search vectors are re-arranged in the ascending order or the descending order. When the accumulation count for the accumulated total of evaluations at the head of the arrangement is a predetermined count, the associated search vector is identified as a motion vector. Accordingly, selection of a search vector subject to a next step of accumulation of evaluations is easy in that the search vector at the head of the arrangement is selected. Therefore, there is no need to refer to the accumulated total of evaluations for each of the plurality of search vectors at each step and the selection of a search vector for which a step of accumulation of evaluations is aborted is easily performed.

Seventh embodiment

In a motion vector detection apparatus according to the seventh embodiment adapted for bidirectional prediction of, for example, the MPEG2 standard, the search window memory unit 2 stores pixel data for first and second search windows each distanced from a block in a coded frame by a predetermined number of rows and a predetermined number of columns, the first search window being provided for detection of a forward motion vector and the second search window being provided for detection of a backward motion vector. A similar process as performed in the foregoing embodiments is performed in the seventh embodiment so that a forward motion vector and a backward motion vector are detected.

The construction of the motion vector detection apparatus according to the seventh embodiment is similar to that of any one of the first through sixth embodiments. The memories 11-(I,J) store pixel data the first and second search windows.

A description will now be given of the operation according to the seventh embodiment.

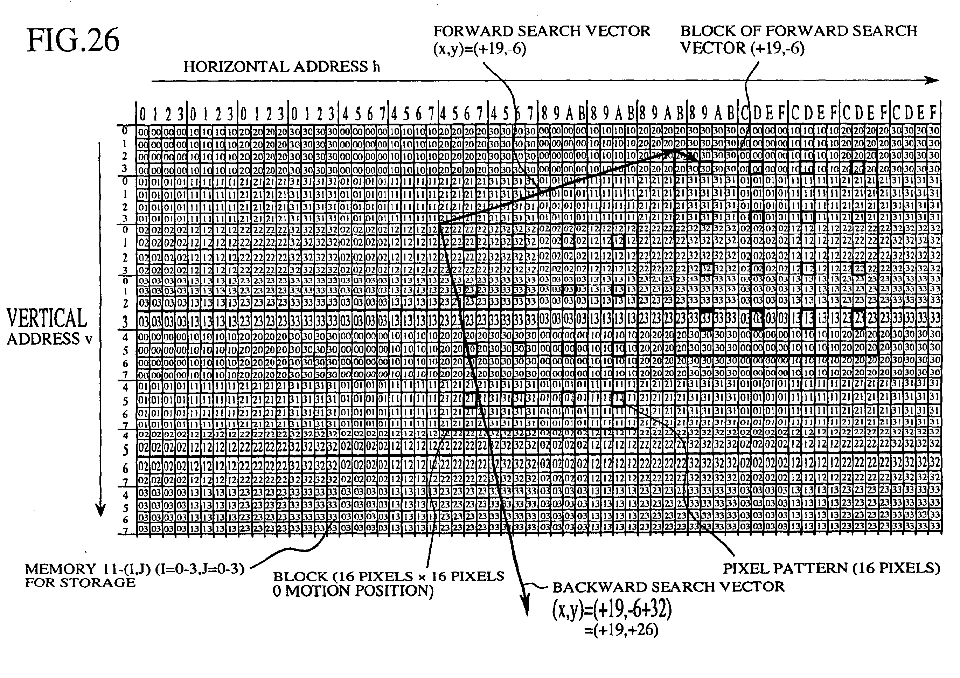

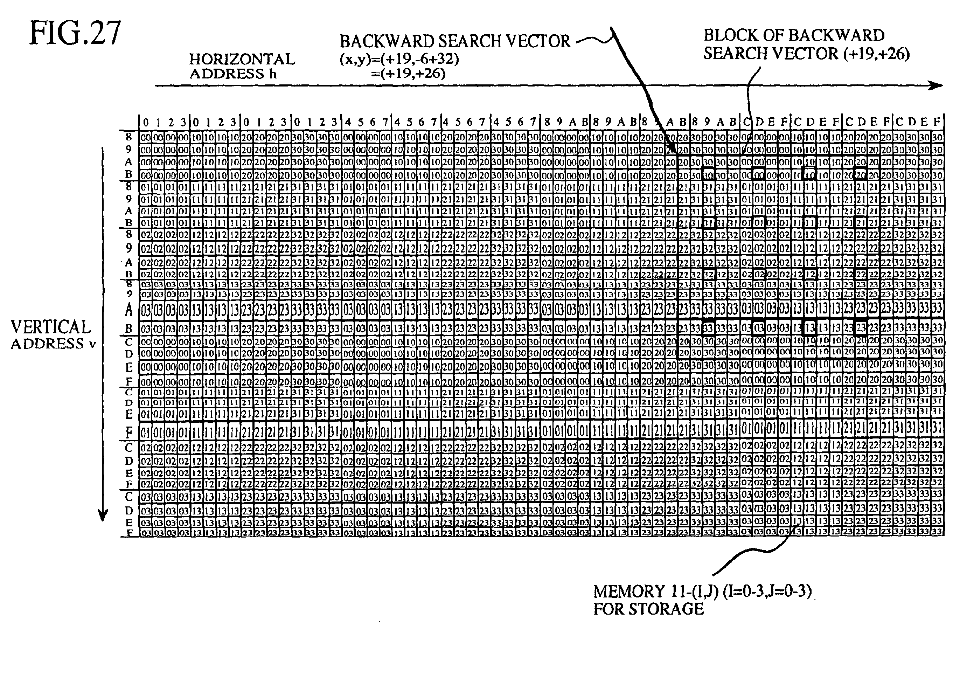

Fig. 26 shows an example of a forward search window and a forward search block. Fig. 27 shows an example of a backward search window arid a backward search block.

As shown in the examples in Figs. 26 and 27, the memories 11-(I,J) of the search window memory unit 2 store pixel data in the forward search window and, at subsequent addresses, stores pixel data for the backward search window.

The forward search window is first searched to identify a forward motion vector according to the construction as described in any of the first through sixth embodiments. The backward search window is then searched to identify a backward motion vector according to the construction as described in any of the first through sixth embodiments.

Accordingly, according to the seventh embodiment, the search window memory unit 2 stores pixel data for first and second search windows each distanced from a block in a coded frame by a predetermined number of rows and a predetermined number of columns, the first search window being provided for detection of a forward motion vector and the second search window being provided for detect ion of a backward motion vector. A forward motion vector and a backward motion vector are detected based on the data thus stored. Accordingly, while the storage capacity required in the search window memory unit 2 is increased, capability of detecting forward and backward motion vectors is available without introducing additional constituting elements.

While the seventh embodiment is suitably used in any of the first through sixth embodiments described above, it may also be used in the motion vector detection apparatus according to the related art.

The number of pixel s in a search window, the number of pixels in a block, the number of pixels in a pixel pattern and the number of memories 11-(I,J) and 16-(I,J) given in the description are only examples. Other numbers may also be used depending on requirements.

INDUSTRIAL APPLICABILITY

As described, the invention is suitably used to detect a motion vector in an image processing system in which motion prediction is performed.

**Claims**

1. A motion vector detection apparatus detecting a motion vector designating motion of each of blocks resulting from dividing a frame in image data relative to a frame already coded, comprising:

first storage means storing pixel data constituting a plurality of pixel patterns constituting the block;

second storage means storing pixel data constituting an area of a predetermined size in a coded frame, such that each memory stores a set of pixel data items at the same positions in a plurality of pixel patterns each comprising a predetermined number of pixels distanced from each other in the area by predetermined intervals;

selection means supplied with a search vector and selecting a pixel pattern in a block of the area designated by the search vector;

comparison means performing a pixel-by-pixel comparison between the pixel pattern selected by said selection means with the corresponding pixel pattern stored in said first storage means; and

detection means detecting a motion vector based on results of comparison by said comparison means.

2. A motion vector detection apparatus detecting a motion vector designating motion of each of blocks resulting from dividing a frame in image data relative to a frame already coded, comprising:

first storage means storing pixel data constituting a plurality of pixel patterns or a plurality of segment blocks constituting the block;

second storage means storing pixel data constituting an area of a predetermined size in a coded frame, such that each memory stores a set of pixel data items at the same positions in a plurality of pixel patterns or a plurality of segment blocks constituting the area;

selection means supplied with a plurality of search vectors and successively selecting a pixel pattern or a segment block in a block of the area designated by the search vector;

comparison means performing a pixel -by-pixel comparison between the pixel pattern or the segment block selected by said selection means with the corresponding pixel pattern or the corresponding segment block stored in said first storage means;

search vector narrowing-down means aborting respective processes in said selection means and said comparison means for a search vector, even before comparison by said comparison means is completed for the entirety of pixel patterns or the entirety of segment blocks using a search vector, depending on results of comparison for pixel patterns and segment blocks processed up to then, the search vector that caused the abortion is eliminated by said search vector narrowing-down means from a group of candidates for a motion vector; and detection means detecting a motion vector from the group of candidates for a motion vector, based on results of comparison by said comparison means.

3. The motion vector detection apparatus according to claim 2, wherein said search vector narrowing-down means removes at least one of the plurality of search vectors from a group of candidates for a motion vector, when a predetermined condition is met after a comparison for the plurality of search vectors for a given pixel pattern or a given segment block is completed.

4. The motion vector detection apparatus according to claim 3, wherein said comparison means calculates an evaluation as a result of comparison, and

said search vector narrowing-down means calculates accumulated totals of evaluations for a plurality of search vectors for a plurality of pixel patterns and arranges the accumulated totals of evaluations for the plurality of search vectors in an ascending order or a descending order for storage, so as to remove at least one search vector from a group of candidates for a motion vector, based on a rank of an accumulated total in the arrangement.

5. The motion vector detection apparatus according to claim 2, wherein said comparison means calculates an evaluation as a result of comparison, said search vector narrowing-down means selects a search vector corresponding to a minimum value or a maximum value of accumulated total of evaluations, performs accumulation of evaluations for the selected search vector, and

said detection means identifies a search vector, providing the minimum value or the maximum value of accumulated total with an accumulation count equal to a predetermined count, as a motion vector.

6. The motion vector detection apparatus according to claim 5, wherein said search vector narrowing-down means stores accumulated totals of evaluations for the plurality of search vectors in an ascending order or a descending order for storage, selects a search vector at a head of the arrangement, performs accumulation of evaluations for the selected search vector, re-arranges the accumulated totals of evaluations for a plurality of search vectors in the ascending order or the descending order for storage, and, when the accumulated total of evaluations at the head of the arrangement is reached with a predetermined accumulation count, the search vector providing that accumulated total is identified as a motion vector.

**EP 1 331 826 A1**

**7.** A motion vector detect ion apparatus detecting a motion vector designating motion of each of blocks resulting from dividing a frame in image data relative to a frame already coded, comprising:

first storage means storing a predetermined number of pixel data items selected from the entirety of pixel data constituting a block;

second storage means storing pixel data in a first area of the coded frame for detection of a forward motion vector and a second area of the coded frame for detection of a backward motion vector;

selection means supplied with a forward search vector and a backward search vector and selecting a predetermined number of pixel data items constituting image data of an area having the same size as the block and distanced by a search vector from a position corresponding to a position of of the block, the predetermined number of pixel data items constituting the pixel data stored in said second storage means;

comparison means comparing the predetermined number of pixel data items stored in said first storage means with the predetermined number of pixel data items selected by said selection means; and

detection means detecting the forward motion vector and the backward motion vector, based on results of comparison by said comparison means.

# FIG.1

EP 1 331 826 A1

# FIG.2

FROM CODED FRAME MEMORY → DATA INPUT DATA OUTPUT 111-(I,J) → TO CONVERTER

WRITE ADDRESS → A

141 SELECTOR → ADDRESS

WRITE/DETECTION SWITCH SIGNAL → B

→ WRITE SIGNAL

READ ADDRESS

SEARCH VECTOR VERTICAL COMPONENT y → ADDER ~135

VERTICAL 0 MOTION POSITION RELATIVE TO SW TOP LEFT CORNER →

ROW NUMBER J OF MEMORY 111-(I,J)

+ → SUBTRACTOR ~136 "3" → ADDER ~137 r×4 → ADDER ~150 "4" → DIVIDER ~138 "14" → MULTIPLIER 139 → ADDER 140

SEARCH VECTOR HORIZONTAL COMPONENT x → ADDER ~131

HORIZONTAL 0 MOTION POSITION RELATIVE TO SW TOP LEFT CORNER →

COLUMN NUMBER I OF MEMORY 111-(I,J)

+ → SUBTRACTOR ~132 "3" → ADDER ~133 q×4 → ADDER ~142 "4" → DIVIDER ~134

EP 1 331 826 A1

FIG.3

SEARCH VECTOR
HORIZONTAL
COMPONENT x

SEARCH VECTOR
VERTICAL
COMPONENT y

_103

~114

~115

| OUTPUT OF MEMORY 111-(0,0) | (0,0) | ~151-(0,0) | HORIZONTALLY CONVERTED DATA (0,0) | (0,0) | ~152-(0,0) | DATA (0,0) |
| OUTPUT OF MEMORY 111-(1,0) | (1,0) | ~151-(1,0) | HORIZONTALLY CONVERTED DATA (1,0) | (1,0) | ~152-(1,0) | DATA (1,0) |
| OUTPUT OF MEMORY 111-(2,0) | (2,0) | ~151-(2,0) | HORIZONTALLY CONVERTED DATA (2,0) | (2,0) | ~152-(2,0) | DATA (2,0) |
| OUTPUT OF MEMORY 111-(3,0) | (3,0) | ~151-(3,0) | HORIZONTALLY CONVERTED DATA (3,0) | (3,0) | ~152-(3,0) | DATA (3,0) |

| OUTPUT OF MEMORY 111-(0,1) | (0,1) | ~151-(0,1) | HORIZONTALLY CONVERTED DATA (0,1) | (0,1) | ~152-(0,1) | DATA (0,1) |
| OUTPUT OF MEMORY 111-(1,1) | (1,1) | ~151-(1,1) | HORIZONTALLY CONVERTED DATA (1,1) | (1,1) | ~152-(1,1) | DATA (1,1) |
| OUTPUT OF MEMORY 111-(2,1) | (2,1) | ~151-(2,1) | HORIZONTALLY CONVERTED DATA (2,1) | (2,1) | ~152-(2,1) | DATA (2,1) |
| OUTPUT OF MEMORY 111-(3,1) | (3,1) | ~151-(3,1) | HORIZONTALLY CONVERTED DATA (3,1) | (3,1) | ~152-(3,1) | DATA (3,1) |

| OUTPUT OF MEMORY 111-(0,2) | (0,2) | ~151-(0,2) | HORIZONTALLY CONVERTED DATA (0,2) | (0,2) | ~152-(0,2) | DATA (0,2) |
| OUTPUT OF MEMORY 111-(1,2) | (1,2) | ~151-(1,2) | HORIZONTALLY CONVERTED DATA (1,2) | (1,2) | ~152-(1,2) | DATA (1,2) |
| OUTPUT OF MEMORY 111-(2,2) | (2,2) | ~151-(2,2) | HORIZONTALLY CONVERTED DATA (2,2) | (2,2) | ~152-(2,2) | DATA (2,2) |
| OUTPUT OF MEMORY 111-(3,2) | (3,2) | ~151-(3,2) | HORIZONTALLY CONVERTED DATA (3,2) | (3,2) | ~152-(3,2) | DATA (3,2) |

| OUTPUT OF MEMORY 111-(0,3) | (0,3) | ~151-(0,3) | HORIZONTALLY CONVERTED DATA (0,3) | (0,3) | ~152-(0,3) | DATA (0,3) |
| OUTPUT OF MEMORY 111-(1,3) | (1,3) | ~151-(1,3) | HORIZONTALLY CONVERTED DATA (1,3) | (1,3) | ~152-(1,3) | DATA (1,3) |
| OUTPUT OF MEMORY 111-(2,3) | (2,3) | ~151-(2,3) | HORIZONTALLY CONVERTED DATA (2,3) | (2,3) | ~152-(2,3) | DATA (2,3) |
| OUTPUT OF MEMORY 111-(3,3) | (3,3) | ~151-(3,3) | HORIZONTALLY CONVERTED DATA (3,3) | (3,3) | ~152-(3,3) | DATA (3,3) |

EP 1 331 826 A1

# FIG.4

151-(I,J)

MEMORY 111-(0,J) ⟶

MEMORY 111-(1,J) ⟶

MEMORY 111-(2,J) ⟶

MEMORY 111-(3,J) ⟶

125
SELECTOR ⟶ HORIZONTALLY CONVERTED DATA (I,J)

SELECTION SIGNAL (=0-3)

COLUMN NUMBER I OF SELECTOR UNIT 151-(I,J) ⟶

SEARCH VECTOR HORIZONTAL COMPONENT x ⟶

123 ADDER ⟶ 124 ROM

# FIG.5

152-(I,J)

SELECTOR UNIT 151-(I,0) ⟶

SELECTOR UNIT 151-(I,1) ⟶

SELECTOR UNIT 151-(I,2) ⟶

SELECTOR UNIT 151-(I,3) ⟶

128
SELECTOR ⟶ VERTICALLY CONVERTED DATA (I,J)

SELECTION SIGNAL (=0-3)

ROW NUMBER J OF SELECTOR UNIT 152-(I,J) ⟶

SEARCH VECTOR VERTICAL COMPONENT y ⟶

126 ADDER ⟶ 127 ROM

# FIG.6

116-(I,J)

FROM CODED FRAME MEMORY → DATA INPUT / DATA OUTPUT → TO EVALUATOR

WRITE ADDRESS → A — 147 SELECTOR → ADDRESS

WRITE/DETECTION SWITCH SIGNAL → B

WRITE SIGNAL

READ ADDRESS

144 VERTICAL QUINARY COUNTER — r → 145 MULTIPLIER ← "4" → 146 ADDER

143 HORIZONTAL QUINARY COUNTER — q

108

EP 1 331 826 A1

# FIG.7

SEARCH VECTOR (x,y)=(+19,-6)

HORIZONTAL ADDRESS h

VERTICAL ADDRESS v

SEARCH BLOCK (16 × 16)

SEGMENT SEARCH BLOCK (4 × 4)

0 MOTION POSITION

I AND J OF MEMORY 111-(I,J) (I=0-3,J=0-3)

# FIG.8

HORIZONTAL ADDRESS q

VERTICAL ADDRESS r

SEARCH BLOCK
(16 PIXELS × 16 PIXELS)

SEGMENT SEARCH BLOCK
(4 PIXELS × 4 PIXELS)

FIG.9

MOTION VECTOR DETECTOR

PIXEL PATTERN ACCUMULATOR

CONVERTER

# FIG.10

FROM CODED FRAME MEMORY

11-(I,J)

DATA INPUT    DATA OUTPUT      → TO CONVERTER

WRITE ADDRESS    A

41

B   SELECTOR   →   ADDRESS

WRITE/DETECTION SWITCH SIGNAL

WRITE SIGNAL

READ ADDRESS

SEARCH VECTOR VERTICAL COMPONENT y

ROW NUMBER J OF MEMORY 11-(I,J)

VERTICAL OFFSET q OF PIXEL PATTERN

SEARCH VECTOR HORIZONTAL COMPONENT x

COLUMN NUMBER I OF MEMORY 11-(I,J)

HORIZONTAL OFFSET p OF PIXEL PATTERN

~42

READ ADDRESS OPERATION UNIT

EP 1 331 826 A1

FIG.11

# FIG.12

51-(I,J)

MEMORY 11-(0,J) →

MEMORY 11-(1,J) →

MEMORY 11-(2,J) →

MEMORY 11-(3,J) →

SELECTOR — 22

→ HORIZONTALLY CONVERTED DATA (I,J)

SELECTION SIGNAL (=0-3)

NUMBER I OF SELECTOR UNIT 51-(I,J) →

SEARCH VECTOR HORIZONTAL COMPONENT x →

HORIZONTAL OFFSET p OF PIXEL PATTERN →

SELECTION SIGNAL GENERATION UNIT ~ 21

# FIG.13

52-(I,J)

SELECTOR UNIT 51-(I,0) →

SELECTOR UNIT 51-(I,1) →

SELECTOR UNIT 51-(I,2) →

SELECTOR UNIT 51-(I,3) →

SELECTOR — 27

→ VERTICALLY CONVERTED DATA (I,J)

SELECTION SIGNAL (=0-3)

NUMBER J OF SELECTOR UNIT 52-(I,J) →

SEARCH VECTOR VERTICAL COMPONENT y →

VERTICAL OFFSET q OF PIXEL PATTERN →

SELECTION SIGNAL GENERATION UNIT ~ 26

# FIG.14

OFFSET OF PIXEL PATTERN (p,q)=(2,1)  
SEARCH VECTOR (x,y)=(+19,-6)  
OFFSET OF PIXEL PATTERN (p,q)=(2,1)  
HORIZONTAL ADDRESS h

VERTICAL ADDRESS v

0 MOTION BLOCK (16 PIXELS × 16 PIXELS)  
PIXEL PATTERN (16 PIXELS)  
MEMORY 11-(I,J) (I=0-3,J=0-3) FOR STORAGE

EP 1 331 826 A1

FIG.15

HORIZONTAL ADDRESS h

OFFSET OF PIXEL PATTERN
(p,q)=(2,1)

VERTICAL
ADDRESS v

BLOCK
(16 PIXELS × 16 PIXELS)

PIXEL PATTERN
(16 PIXELS)

FIG.16B

FIG.16A

# FIG.17B

POINTS USED IN PIXEL
PATTERN OF FIRST
EMBODIMENT

LEVELS IN
SEARCH WINDOW

LEVELS IN REFERENCE

LEVEL

HORIZONTAL 1 LINE OF BLOCK
(16 PIXELS) (EVALUATION BY SUBSAMPLE)

# FIG.17A

POINTS USED IN
SEGMENT BLOCK

LEVELS IN SEARCH WINDOW

LEVELS IN REFERENCE

LEVEL

HORIZONTAL 1 LINE OF BLOCK
(16 PIXELS) (EVALUATION BY SUBSAMPLE)

# FIG.18

EP 1 331 826 A1

# FIG.19

# FIG.20

| SEARCH POINT VECTOR | ACCUMULATION COUNT | ACCUMULATED TOTAL | ABORTION FLAG |
|---|---|---|---|
| ( 0, 0 ) | 12 | 38 | 0 |
| ( 0, 1 ) | 12 | 174 | 0 |
| ( 0,-1 ) | 12 | 60 | 0 |
| ( 1, 0 ) | 12 | 82 | 0 |
| ( -1, 0 ) | 12 | 275 | 0 |
| ( 0, 2 ) | 5 | 180 | 1 |
| ( 0,-2 ) | 12 | 194 | 0 |
| ( 2, 0 ) | 12 | 310 | 0 |
| ( -2, 0 ) | 6 | 213 | 1 |
| ( 1, 1 ) | 3 | 82 | 1 |
| ( 1,-1 ) | 12 | 312 | 0 |
| ( -1,-1 ) | 8 | 259 | 1 |
| ( -1, 1 ) | 12 | 74 | 0 |
| ( 0, 4 ) | 12 | 382 | 0 |
| ( 0,-4 ) | 9 | 245 | 1 |
| ⋮ | ⋮ | ⋮ | ⋮ |

FIG.21

SEARCH VECTOR

| | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| (x15,y15) | 45 | 110 | 234 | | | | | | | | | | | | | |
| (x14,y14) | 50 | 109 | 120 | 322 | | | | | | | | | | | | |
| (x13,y13) | 81 | 147 | 218 | | | | | | | | | | | | | |
| (x12,y12) | 44 | 101 | 191 | 278 | | | | | | | | | | | | |
| (x11,y11) | 62 | 121 | 354 | | | | | | | | | | | | | |
| (x10,y10) | 56 | 79 | 133 | 199 | 251 | 341 | 417 | 478 | 518 | 537 | 568 | | | | | |
| (x9,y9) | 40 | 141 | 194 | 226 | 381 | | | | | | | | | | | |
| (x8,y8) | 9 | 60 | 122 | 170 | 225 | 274 | 353 | 443 | 497 | 532 | 560 | 584 | 607 | | | |
| (x7,y7) | 36 | 272 | | | | | | | | | | | | | | |
| (x6,y6) | 38 | 98 | 160 | 244 | 325 | 405 | 491 | 548 | 636 | | | | | | | |
| (x5,y5) | 43 | 56 | 64 | 88 | 173 | 198 | 229 | 248 | 279 | 290 | 319 | 328 | 350 | 369 | 385 | 393 |
| (x4,y4) | 59 | 197 | | | | | | | | | | | | | | |
| (x3,y3) | 37 | 61 | 82 | 134 | 166 | 214 | 240 | 277 | 334 | 355 | 380 | 391 | 432 | 467 | 490 | 526 |
| (x2,y2) | 29 | 30 | 72 | 125 | 150 | 190 | 247 | 339 | 373 | 482 | 582 | 590 | | | | |
| (x1,y1) | 32 | 83 | 131 | 255 | | | | | | | | | | | | |
| (x0,y0) | 7 | 26 | 75 | 140 | 224 | 318 | 421 | 530 | 554 | 590 | | | | | | |

ACCUMULATION COUNT

# FIG.22

EVALUATION

PIXEL PATTERN ACCUMULATOR — 8A

UPDATED CUMULATIVE DATA

7A

MOTION VECTOR DETECTOR

71-(n+1)  71-n   71-(i+1)  71-i   71-(i-1)   71-2   71-1

CLK

66

SEARCH VECTOR (x,y)

OFFSET (p,q)

OPERATION MEANS — 67

EP 1 331 826 A1

38

EP 1 331 826 A1

## FIG.23

UPDATED CUMULATIVE DATA

71-i

MAXIMUM
CUMULATIVE DATA

SELECTOR ~83

REGISTER 84

CUMULATIVE
DATA

CUMULATIVE
DATA

CUMULATIVE
DATA

CONTROL
CIRCUIT ~82

81
COMPARATOR

B

A

COMPARISON
RESULT

COMPARISON
RESULT

COMPARISON
RESULT

CLK

FROM OPERATION
MEANS 67

FIG.24

FIG.25

EVALUATION

8A

PIXEL PATTERN ACCUMULATOR

7A

MOTION VECTOR DETECTOR

71-n  71-(n-1)  71-(i+1)  71-i  71-(i-1)  71-2  71-1

CLK

66

67

SEARCH VECTOR (x,y)

OFFSET (p,q)

OPERATION MEANS

EP 1 331 826 A1

# FIG.26

FORWARD SEARCH VECTOR
(x,y)=(+19,-6)

BLOCK OF FORWARD SEARCH
VECTOR (+19,-6)

HORIZONTAL ADDRESS h

VERTICAL
ADDRESS v

MEMORY 11-(I,J) (I=0-3,J=0-3)
FOR STORAGE

BLOCK (16 PIXELS × 16 PIXELS
0 MOTION POSITION)

BACKWARD SEARCH VECTOR

$(x,y)=(+19,-6+32)$
$=(+19,+26)$

PIXEL PATTERN (16 PIXELS)

EP 1 331 826 A1

42

FIG.27

EP 1 331 826 A1

# EP 1 331 826 A1

## INTERNATIONAL SEARCH REPORT

| | International application No. |
|---|---|
| | PCT/JP00/07598 |

**A. CLASSIFICATION OF SUBJECT MATTER**
Int.Cl$^7$   H04N7/32

According to International Patent Classification (IPC) or to both national classification and IPC

**B. FIELDS SEARCHED**

Minimum documentation searched (classification system followed by classification symbols)
Int.Cl$^7$   H04N7/24-7/68

Documentation searched other than minimum documentation to the extent that such documents are included in the fields searched
Jitsuyo Shinan Koho        1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)
JICST FILE(JOIS) in Japanese, in English
IEEE/IEE ELECTRONIC LIBRARY in English

**C. DOCUMENTS CONSIDERED TO BE RELEVANT**

| Category* | Citation of document, with indication, where appropriate, of the relevant passages | Relevant to claim No. |
|---|---|---|
| A | JP 2-274083 A (NEC Corporation), 08 November, 1990 (08.11.1990), Full text; Figs. 1 to 6   (Family: none) | 1-7 |
| A | JP 2-295288 A (NEC Corporation), 06 December, 1990 (06.12.1990), Full text; Figs. 1 to 4   (Family: none) | 1-7 |
| A | JP 4-180382 A (Matsushita Electric Ind. Co., Ltd.), 26 June, 1992 (26.06.1992), Full text; Figs. 1 to 3   (Family: none) | 1-7 |
| A | JP 5-260460 A (Matsushita Electric Ind. Co., Ltd.), 08 October, 1993 (08.10.1993), Full text; Figs. 1 to 5 & US 5475446 A | 1-7 |
| A | JP 7-162864 A (Ricoh Company, Ltd.), 23 June, 1995 (23.06.1995), Full text; Figs. 1 to 10   (Family: none) | 1-7 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 January, 2001 (23.01.01) | 30 January, 2001 (30.01.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

44

**INTERNATIONAL SEARCH REPORT**

| International application No. |
| --- |
| PCT/JP00/07598 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-69484 A (Sony Corporation),<br>03 March, 2000 (03.03.2000),<br>Full text; Figs. 1 to 7<br>& KR 2000-11728 A | 1-7 |

Form PCT/ISA/210 (continuation of second sheet) (July 1992)